# EUROPEAN PATENT SPECIFICATION

(11) **EP 4 568 122 B1**
(45) Date of publication and mention of the grant of the patent: **28.10.2026**
(21) Application number: 23858878.4
(22) Date of filing: 28.06.2023
(51) Int. Cl.: H04B 1/40, H04W 52/02

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 30.08.2022 CN 202211048783
(43) Date of publication of application: 11.06.2025
(73) Proprietor: Huawei Technologies Co., Ltd., Shenzhen, Guangdong 518129 (CN)
(72) Inventor: WU, Hengheng, Shenzhen, Guangdong 518129 (CN); ZOU, Zhiqiang, Shenzhen, Guangdong 518129 (CN); MA, Ni, Shenzhen, Guangdong 518129 (CN); WU, Yaqi, Shenzhen, Guangdong 518129 (CN)
(74) Representative: Pfenning, Meinig & Partner mbB
(86) International application number: PCT/CN2023/103492
(87) International publication number: WO 2024/045840

(56) References cited:
- EP-A1- 3 399 651
- WO-A1-2017/114159
- CN-A- 101 232 653
- CN-A- 104 660 320
- CN-A- 106 330 279
- CN-A- 112 714 467
- US-A1- 2015 085 690
- US-A1- 2018 007 562
- US-A1- 2020 358 473
- US-A1- 2021 289 439

## Description

### TECHNICAL FIELD

This application relates to the field of communication technologies, and in particular, to a communication method and apparatus.

### BACKGROUND

Against the backdrop of a "dual carbon" goal, energy consumption of wireless communication networks accounts for 1% to 2% of energy consumption of the whole society. Therefore, major operators and device vendors are actively promoting implementation of energy-saving measures for the wireless networks, to fall caps on carbon emissions. In the energy consumption of the wireless communication networks, energy consumption of a radio remote unit (radio remote unit, RRU) accounts for more than 60%. It can be learned that how to reduce power consumption of the RRU is an urgent problem to be resolved.

EP 3 399 651 A1, US 2021/289439 A1, US 2020/358473 A1, US 2015/085690 A1 are exemplary disclosures of communication apparatuses with RRUs.

### SUMMARY

Embodiments of this application provide a communication method and apparatus, to reduce power consumption of an RRU.

According to a first aspect, an embodiment of this application provides a communication apparatus, where the apparatus may include N radio remote units, a first module, and N antenna groups, where each radio remote unit is connected to the first module, each antenna group is connected to the first module, and the N radio remote units one-to-one correspond to the N antenna groups, where N is an integer greater than 1; a first radio remote unit in the N radio remote units is configured to send a first radio frequency signal to the first module; the first module may be configured to: receive the first radio frequency signal from the first radio remote unit, divide the first radio frequency signal into M radio frequency sub-signals, and send the M radio frequency sub-signals to M antenna groups corresponding to M radio remote units in the N radio frequency signals; and the M antenna groups may be configured to send the M radio frequency sub-signals. Herein, M is an integer greater than 1 and less than or equal to N.

In the foregoing embodiment, the first radio frequency signal from the first radio remote unit is divided into two or more radio frequency sub-signals through the first module, and two or more antenna groups send the radio frequency sub-signals, so that a radio frequency signal of one radio remote unit drives two or more antenna groups. In comparison with an implementation in which one radio remote unit drives one antenna group, in this embodiment of this application, one radio remote unit may be used to drive a plurality of antenna groups. In this case, at least one radio remote unit in a plurality of radio remote units corresponding to the plurality of antenna groups is in an idle state or a non-working state, so that basic power consumption of the communication apparatus is reduced by using a radio remote unit as a granularity.

In a possible design, load of a cell corresponding to the first radio remote unit is less than or equal to a load threshold, and load of a cell corresponding to each radio remote unit in the M radio remote units is less than or equal to the load threshold. In another possible design, the N radio remote units may further include a second radio remote unit, and load of a cell corresponding to the second radio remote unit is greater than a load threshold; the second radio remote unit is configured to send a second radio frequency signal to the first module; and the first module is further configured to: receive the second radio frequency signal, and send the second radio frequency signal to an antenna corresponding to the second radio remote unit. According to this design, a radio remote unit may conditionally drive a plurality of antenna groups, or may conditionally drive an antenna corresponding to the radio remote unit. When load of a cell corresponding to a radio remote unit is less than or equal to the load threshold, it means that the cell corresponding to the radio remote unit is in a medium-load state or a low-load state. In this case, the radio remote unit may drive one or more other radio remote units in the medium-load state or the low-load state. In this way, the one or more radio remote units are in an idle state or a non-working state. This can reduce basic power consumption of the one or more radio remote units. However, when load of a cell corresponding to a radio remote unit is greater than the load threshold, it means that the cell corresponding to the radio remote unit is in a high-load state. In this case, the radio remote unit may drive an antenna corresponding to the radio remote unit, to meet a service requirement of the cell corresponding to the radio remote unit.

In a possible design, P antenna groups in the N antenna groups are configured to: receive P radio frequency signals, and send the P radio frequency signals to the first module, where P is an integer greater than 1 and less than or equal to N; and the first module is further configured to: receive the P radio frequency signals, combine the P radio frequency signals into a third radio frequency signal, and send the third radio frequency signal to the first radio remote unit. According to this design, a plurality of radio frequency signals received by a plurality of antenna groups may be processed by one radio remote unit, so that one or more radio remote units in a plurality of radio remote units corresponding to the plurality of antenna groups may be in the idle state or the non-working state, to greatly reduce power consumption of the radio remote unit.

In a possible design, the load of the cell corresponding to the first radio remote unit is less than or equal to the load threshold, and load of a cell corresponding to each radio remote unit in P radio remote units corresponding to the P antenna groups is less than or equal to the load threshold. In this design, one radio remote unit may conditionally receive radio frequency signals from a plurality of antenna groups, so that one or more radio remote units in a plurality of radio remote units corresponding to the plurality of antenna groups may be in the idle state or the non-working state, to greatly reduce power consumption of the radio remote unit.

In a possible design, the first module may be implemented in the following manners: Manner 1: The first module includes (N-1) cross-connect units. Manner 2: The first module includes a first submodule and (N-1) second submodules, where the first submodule includes (N-1) cross-connect units. The following separately describes the two implementations.

Manner 1: The first module includes the (N-1) cross-connect units, and each cross-connect unit includes a first port, a second port, a third port, and a fourth port. The first radio remote unit may send the first radio frequency signal to the first module in the following manner: The first radio remote unit sends the first radio frequency signal to a first port of the first cross-connect unit, where the first cross-connect unit is a cross-connect unit in the (N-1) cross-connect units, a fourth port of the first cross-connect unit is connected to a radio remote unit, in the N radio remote units, other than the first radio remote unit, a second port of the first cross-connect unit is connected to a first antenna, and a third port of the first cross-connect unit is connected to a cross-connect unit, in the (N-1) cross-connect units, other than the first cross-connect unit or connected to an antenna group, in the N antenna groups, other than the first antenna. In this manner, the first cross-connect unit in the first module may send the first radio frequency signal or the radio frequency sub-signal of the first radio frequency signal to a radio remote unit other than the first radio remote unit.

For example, N is equal to 2, a first port of the (N-1) cross-connect unit is connected to the first radio frequency unit, a fourth port of the (N-1) cross-connect unit is connected to a radio remote unit, in the N radio remote units, other than the first radio remote unit, a second port of the (N-1) cross-connect unit is connected to the first antenna, and a third port of the (N-1) cross-connect unit is connected to an antenna, in the N antenna groups, other than the first antenna; or N is greater than 2, a first port of a 1^{st} cross-connect unit in the (N-1) cross-connect units is connected to a 1^{st} radio remote unit in the N radio remote units, and a second port of the 1^{st} cross-connect unit is connected to an antenna corresponding to the 1^{st} radio remote unit; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an antenna corresponding to an i^{th} radio remote unit in the N radio remote units, a fourth port of the i^{th} cross-connect unit is connected to an (i+1)^{th} radio remote unit in the N radio remote units, a third port of the i^{th} cross-connect unit is connected to a first port of an (i+1)^{th} cross-connect unit in the (N-1) cross-connect units, and i is an integer greater than 1 and less than (N-1); and a second port of an (N-1)^{th} cross-connect unit in the (N-1) cross-connect units is connected to an antenna corresponding to an (N-1)^{th} radio remote unit in the N radio remote units, a fourth port of the (N-1)^{th} cross-connect unit is connected to an N^{th} radio remote unit in the N radio remote units, and a third port of the (N-1)^{th} cross-connect unit is connected to an antenna corresponding to the N^{th} radio remote unit. In this example, the communication apparatus may drive a plurality of antenna groups by a few radio remote units through the cross-connect unit in the first module, so that a part of radio remote units is in the idle state or the non-working state, to reduce basic power consumption of the radio remote unit.

Manner 2: The first module includes the first submodule and the (N-1) second submodules. The first submodule is connected to each second submodule, and a first antenna is an antenna group in the N antenna groups. That each radio remote unit is connected to the first module may be: The first radio remote unit is connected to the first submodule, (N-1) radio remote units, in the N radio remote units, other than the first radio remote unit are connected to the (N-1) second submodules, and one second submodule is connected to one radio remote unit. That each antenna group is connected to the first module may be: The first antenna corresponding to the first radio remote unit is connected to the first submodule, (N-1) antenna groups, in the N antenna groups, other than the first antenna are connected to the (N-1) second submodules, and one second submodule is connected to one antenna group. In this manner, the radio frequency signal of the first radio remote unit may drive a plurality of antenna groups through the first submodule and the second submodule, to reduce power consumption of the radio remote unit; and in addition, the remaining (N-1) radio remote units may drive respective corresponding antennas through the (N-1) second submodules. In this way, compatibility is good, and the second submodule, the radio remote unit, and the antenna may be arranged close to each other, so that attenuation of the radio frequency signal can be reduced.

For example, the M radio remote units include the first radio remote unit, and the first module may divide the first radio frequency signal into the M radio frequency sub-signals, and send the M radio frequency sub-signals to the M antenna groups corresponding to the M radio remote units in the N radio remote units in the following manner: The first submodule may be configured to: divide the first radio frequency signal into the M radio frequency sub-signals, send one radio frequency sub-signal to the first antenna, and send the remaining (M-1) radio frequency sub-signals to (M-1) second submodules connected to (M-1) radio remote units, where the (M-1) radio remote units are radio remote units, in the M radio remote units, other than the first radio remote unit; and the (M-1) second submodules may be configured to send the (M-1) radio frequency sub-signals to (M-1) antenna groups corresponding to the (M-1) radio remote units. Alternatively, the M radio remote units do not include the first radio remote unit, and the first module is configured to: divide the first radio frequency signal into the M radio frequency sub-signals, and send the M radio frequency sub-signals to the M antenna groups corresponding to the M radio remote units in the N radio remote units may be: The first submodule is configured to: divide the first radio frequency signal into the M radio frequency sub-signals, and send the M radio frequency sub-signals to M second submodules connected to the M radio remote units; and the M second submodules are configured to send the M radio frequency sub-signals to the M antenna groups. In this example, the first submodule divides the first radio frequency signal into the M radio frequency sub-signals, and the M radio frequency sub-signals may be all or partially sent to the second submodule, so that an implementation is flexible.

For example, the first submodule may include (N-1) cross-connect units, and each cross-connect unit includes a first port, a second port, a third port, and a fourth port; and that the first radio remote unit is connected to the first submodule may be: The first radio remote unit is connected to a first port of a first cross-connect unit, where the first cross-connect unit is a cross-connect unit in the (N-1) cross-connect units, a fourth port of the first cross-connect unit is grounded, a second port of the first cross-connect unit is connected to the first antenna, and a third port of the first cross-connect unit is connected to a cross-connect unit, in the (N-1) cross-connect units, other than the first cross-connect unit or connected to a second submodule in the (N-1) second submodules. In this example, the first cross-connect unit in the first submodule may send the first radio frequency signal or the radio frequency sub-signal of the first radio frequency signal to the second submodule.

For example, N is equal to 2, a first port of the (N-1) cross-connect unit is connected to the first radio frequency unit, a fourth port of the (N-1) cross-connect unit is grounded, a second port of the (N-1) cross-connect unit is connected to the first antenna, a third port of the (N-1) cross-connect unit is connected to the (N-1) second submodule, and the (N-1) second submodule is connected to an antenna, in the N antenna groups, other than the first antenna; or N is greater than 2, a first port of a 1^{st} cross-connect unit in the (N-1) cross-connect units is connected to the first radio frequency unit, a fourth port of the 1^{st} cross-connect unit is grounded, and a second port of the 1^{st} cross-connect unit is connected to the first antenna; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an (i-1)^{th} second submodule in the (N-1) second submodules, a fourth port of the i^{th} cross-connect unit is grounded, and i is an integer greater than 1 and less than (N-1); and a first port of an (N-1)^{th} cross-connect unit in the (N-1) cross-connect units is connected to a third port of an (N-2)^{th} cross-connect unit in the (N-1) cross-connect units, a second port of the (N-1)^{th} cross-connect unit is connected to an (N-2)^{th} second submodule in the (N-1) second submodules, a fourth port of the (N-1) cross-connect units is grounded, and a third port of the (N-1) cross-connect units is connected to an (N-1)^{th} second submodule in the (N-1) second submodules. In this example, the communication apparatus may drive a plurality of antenna groups by a few radio remote units through the cross-connect unit in the first submodule and the second submodule, so that a part of radio remote units is in the idle state or the non-working state, to reduce basic power consumption of the radio remote unit.

In a possible design, the first cross-connect unit may be configured to: receive the first radio frequency signal through the first port, and send the first radio frequency signal through the third port; or the first cross-connect unit may be configured to: receive the first radio frequency signal through the first port, divide the first radio frequency signal into two radio frequency sub-signals, send one of the two radio frequency sub-signals through the second port, and send the remaining one of the two radio frequency sub-signals through the third port. In this design, the first radio remote unit may drive, through the first cross-connect unit connected to the first radio remote unit, an antenna corresponding to another radio remote unit, so that the another radio remote unit is in the idle state or the non-working state.

According to a second aspect, an embodiment of this application provides a communication method, where the method may be applied to a communication apparatus, and the communication apparatus may include N radio remote units, a first module, and N antenna groups, where each radio remote unit is connected to the first module, each antenna group is connected to the first module, and the N radio remote units one-to-one correspond to the N antenna groups, where N is an integer greater than 1. In the method, a first radio remote unit in the N radio remote units sends a first radio frequency signal to the first module; the first module receives the first radio frequency signal, divides the first radio frequency signal into M radio frequency sub-signals, and sends the M radio frequency sub-signals to M antenna groups corresponding to M radio remote units in the N radio remote units, where M is an integer greater than 1 and less than or equal to N; and the M antenna groups send the M radio frequency sub-signals.

In a possible design, load of a cell corresponding to the first radio remote unit is less than or equal to a load threshold, and load of a cell corresponding to each radio remote unit in the M radio remote units is less than or equal to the load threshold.

In a possible design, the N radio remote units further include a second radio remote unit, and load of a cell corresponding to the second radio remote unit is greater than a load threshold; and the method further includes: The second radio remote unit sends a second radio frequency signal to the first module; and the first module receives the second radio frequency signal, and sends the second radio frequency signal to an antenna corresponding to the second radio remote unit.

In a possible design, the method further includes: P antenna groups in the N antenna groups receive P radio frequency signals, and send the P radio frequency signals to the first module, where P is an integer greater than 1 and less than N; and the first module receives the P radio frequency signals, combines the P radio frequency signals into a third radio frequency signal, and sends the third radio frequency signal to the first radio remote unit.

In a possible design, the load of the cell corresponding to the first radio remote unit is less than or equal to the load threshold, and load of a cell corresponding to each radio remote unit in P radio remote units corresponding to the P antenna groups is less than or equal to the load threshold.

In a possible design, the first module may be implemented in the following manners: Manner 1: The first module includes (N-1) cross-connect units. Manner 2: The first module includes a first submodule and (N-1) second submodules, where the first submodule includes (N-1) cross-connect units. The following separately describes the two implementations.

Manner 1: The first module includes the (N-1) cross-connect units, and each cross-connect unit includes a first port, a second port, a third port, and a fourth port. That the first radio remote unit sends the first radio frequency signal to the first module may be: The first radio remote unit sends the first radio frequency signal to a first port of the first cross-connect unit, where the first cross-connect unit is a cross-connect unit in the (N-1) cross-connect units, a fourth port of the first cross-connect unit is connected to a radio remote unit, in the N radio remote units, other than the first radio remote unit, a second port of the first cross-connect unit is connected to a first antenna, and a third port of the first cross-connect unit is connected to a cross-connect unit, in the (N-1) cross-connect units, other than the first cross-connect unit or connected to an antenna group, in the N antenna groups, other than the first antenna.

For example, N is equal to 2, a first port of the (N-1) cross-connect unit is connected to the first radio frequency unit, a fourth port of the (N-1) cross-connect unit is connected to a radio remote unit, in the N radio remote units, other than the first radio remote unit, a second port of the (N-1) cross-connect unit is connected to the first antenna, and a third port of the (N-1) cross-connect unit is connected to an antenna, in the N antenna groups, other than the first antenna; or N is greater than 2, a first port of a 1^{st} cross-connect unit in the (N-1) cross-connect units is connected to a 1^{st} radio remote unit in the N radio remote units, and a second port of the 1^{st} cross-connect unit is connected to an antenna corresponding to the 1^{st} radio remote unit; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an antenna corresponding to an i^{th} radio remote unit in the N radio remote units, a fourth port of the i^{th} cross-connect unit is connected to an (i+1)^{th} radio remote unit in the N radio remote units, a third port of the i^{th} cross-connect unit is connected to a first port of an (i+1)^{th} cross-connect unit in the (N-1) cross-connect units, and i is an integer greater than 1 and less than (N-1); and a second port of an (N-1)^{th} cross-connect unit in the (N-1) cross-connect units is connected to an antenna corresponding to an (N-1)^{th} radio remote unit in the N radio remote units, a fourth port of the (N-1)^{th} cross-connect unit is connected to an N^{th} radio remote unit in the N radio remote units, and a third port of the (N-1)^{th} cross-connect unit is connected to an antenna corresponding to the N^{th} radio remote unit.

Manner 2: The first module includes the first submodule and the (N-1) second submodules. The first submodule is connected to each second submodule. That each radio remote unit is connected to the first module may be: The first radio remote unit is connected to the first submodule, (N-1) radio remote units, in the N radio remote units, other than the first radio remote unit are connected to the (N-1) second submodules, and one second submodule is connected to one radio remote unit. That each antenna group is connected to the first module may be: A first antenna corresponding to the first radio remote unit is connected to the first submodule, (N-1) antenna groups, in the N antenna groups, other than the first antenna are connected to the (N-1) second submodules, and one second submodule is connected to one antenna group.

For example, the M radio remote units include the first radio remote unit, and that the first module divides the first radio frequency signal into M radio frequency sub-signals, and sends the M radio frequency sub-signals to M antenna groups corresponding to M radio remote units in the N radio remote units may be: The first submodule divides the first radio frequency signal into the M radio frequency sub-signals, sends one radio frequency sub-signal to the first antenna, and sends the remaining (M-1) radio frequency sub-signals to (M-1) second submodules connected to (M-1) radio remote units, where the (M-1) radio remote units are radio remote units, in the M radio remote units, other than the first radio remote unit; and the (M-1) second submodules send the (M-1) radio frequency sub-signals to (M-1) antenna groups corresponding to the (M-1) radio remote units. Alternatively, the M radio remote units do not include the first radio remote unit, and that the first module divides the first radio frequency signal into M radio frequency sub-signals, and sends the M radio frequency sub-signals to M antenna groups corresponding to M radio remote units in the N radio remote units may be: The first submodule divides the first radio frequency signal into the M radio frequency sub-signals, and sends the M radio frequency sub-signals to M second submodules connected to the M radio remote units; and the M second submodules send the M radio frequency sub-signals to the M antenna groups.

For example, the first submodule includes (N-1) cross-connect units, and each cross-connect unit includes a first port, a second port, a third port, and a fourth port; and that the first radio remote unit is connected to the first submodule may be: The first radio remote unit is connected to a first port of a first cross-connect unit, where the first cross-connect unit is a cross-connect unit in the (N-1) cross-connect units, a fourth port of the first cross-connect unit is grounded, a second port of the first cross-connect unit is connected to the first antenna, and a third port of the first cross-connect unit is connected to a cross-connect unit, in the (N-1) cross-connect units, other than the first cross-connect unit or connected to a second submodule in the (N-1) second submodules.

For example, N is equal to 2, a first port of the (N-1) cross-connect unit is connected to the first radio frequency unit, a fourth port of the (N-1) cross-connect unit is grounded, a second port of the (N-1) cross-connect unit is connected to the first antenna, a third port of the (N-1) cross-connect unit is connected to the (N-1) second submodule, and the (N-1) second submodule is connected to an antenna, in the N antenna groups, other than the first antenna; or N is greater than 2, a first port of a 1^{st} cross-connect unit in the (N-1) cross-connect units is connected to the first radio frequency unit, a fourth port of the 1^{st} cross-connect unit is grounded, and a second port of the 1^{st} cross-connect unit is connected to the first antenna; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an (i-1)^{th} second submodule in the (N-1) second submodules, a fourth port of the i^{th} cross-connect unit is grounded, and i is an integer greater than 1 and less than (N-1); and a first port of an (N-1)^{th} cross-connect unit in the (N-1) cross-connect units is connected to a third port of an (N-2)^{th} cross-connect unit in the (N-1) cross-connect units, a second port of the (N-1)^{th} cross-connect unit is connected to an (N-2)^{th} second submodule in the (N-1) second submodules, a fourth port of the (N-1) cross-connect units is grounded, and a third port of the (N-1) cross-connect units is connected to an (N-1)^{th} second submodule in the (N-1) second submodules.

In a possible design, that the first module receives the first radio frequency signal from the first radio remote unit may be: The first cross-connect unit receives the first radio frequency signal through the first port, and sends the first radio frequency signal through the third port; or the first cross-connect unit receives the first radio frequency signal through the first port, divides the first radio frequency signal into two radio frequency sub-signals, sends one of the two radio frequency sub-signals through the second port, and sends the remaining one of the two radio frequency sub-signals through the third port.

For beneficial effects of the method in the second aspect and any possible design of the second aspect, refer to beneficial effects of the apparatus in the first aspect and any possible design of the first aspect. Details are not described herein again.

According to a third aspect, an embodiment of this application provides a communication apparatus, where the apparatus may include N radio remote units, a first module, and N antenna groups, where each radio remote unit is connected to the first module, each antenna group is connected to the first module, and the N radio remote units one-to-one correspond to the N antenna groups, where N is an integer greater than 1; P antenna groups in the N antenna groups are configured to: receive P radio frequency signals, and send the P radio frequency signals to the first module, where P is an integer greater than 1 and less than or equal to N; the first module may be configured to: receive the P radio frequency signals, combine the P radio frequency signals into a third radio frequency signal, and send the third radio frequency signal to a first radio remote unit in the N radio remote units; and the first radio remote unit may be configured to receive the third radio frequency signal.

In the foregoing embodiment, a plurality of radio frequency signals from a plurality of antenna groups are combined into one radio frequency signal through the first module, and the one radio frequency signal is sent to one radio remote unit, so that one or more radio remote units in a plurality of radio remote units corresponding to the plurality of antenna groups are in an idle state or a non-working state. In comparison with an implementation in which the radio frequency signals of one antenna group are received by one radio remote unit, in this embodiment of this application, basic power consumption of the communication apparatus can be reduced by using a radio remote unit as a granularity.

In a possible design, load of a cell corresponding to the first radio remote unit is less than or equal to a load threshold, and load of a cell corresponding to each radio remote unit in P radio remote units corresponding to the P antenna groups is less than or equal to the load threshold. In another possible design, the N radio remote units may further include a third radio remote unit, and load of a cell corresponding to the third radio remote unit is greater than a load threshold; an antenna corresponding to the third radio remote unit is configured to: receive a fourth radio frequency signal, and send the fourth radio frequency signal to the first module; the first module is further configured to: receive the fourth radio frequency signal, and send the fourth radio frequency signal to the third radio remote unit; and the third radio remote unit may be configured to receive the fourth radio frequency signal.

In a possible design, the first radio remote unit may be further configured to send a first radio frequency signal to the first module; the first module is further configured to: receive the first radio frequency signal, divide the first radio frequency signal into M radio frequency sub-signals, and send the M radio frequency sub-signals to M antenna groups corresponding to M radio remote units in the N radio remote units, where M is an integer greater than 1 and less than or equal to N; and the M antenna groups may be configured to send the M radio frequency sub-signals.

In a possible design, the load of the cell corresponding to the first radio remote unit is less than or equal to the load threshold, and load of a cell corresponding to each radio remote unit in the M radio remote units is less than or equal to the load threshold.

In a possible design, the first module may be implemented in the following manners: Manner 1: The first module includes (N-1) cross-connect units. Manner 2: The first module includes a first submodule and (N-1) second submodules, where the first submodule includes (N-1) cross-connect units. The following separately describes the two implementations.

Manner 1: The first module includes the (N-1) cross-connect units, and each cross-connect unit includes a first port, a second port, a third port, and a fourth port; and the first module may send the third radio frequency signal to the first radio remote unit in the following manner: A first port of a first cross-connect unit sends the first radio frequency signal to the first radio remote unit, where the first cross-connect unit is a cross-connect unit in the (N-1) cross-connect units, a fourth port of the first cross-connect unit is connected to a radio remote unit, in the N radio remote units, other than the first radio remote unit, a second port of the first cross-connect unit is connected to a first antenna, and a third port of the first cross-connect unit is connected to a cross-connect unit, in the (N-1) cross-connect units, other than the first cross-connect unit or connected to an antenna group, in the N antenna groups, other than the first antenna.

For example, N is equal to 2, a first port of the (N-1) cross-connect unit is connected to the first radio frequency unit, a fourth port of the (N-1) cross-connect unit is connected to a radio remote unit, in the N radio remote units, other than the first radio remote unit, a second port of the (N-1) cross-connect unit is connected to the first antenna, and a third port of the (N-1) cross-connect unit is connected to an antenna, in the N antenna groups, other than the first antenna; or N is greater than 2, a first port of a 1^{st} cross-connect unit in the (N-1) cross-connect units is connected to a 1^{st} radio remote unit in the N radio remote units, and a second port of the 1^{st} cross-connect unit is connected to an antenna corresponding to the 1^{st} radio remote unit; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an antenna corresponding to an i^{th} radio remote unit in the N radio remote units, a fourth port of the i^{th} cross-connect unit is connected to an (i+1)^{th} radio remote unit in the N radio remote units, a third port of the i^{th} cross-connect unit is connected to a first port of an (i+1)^{th} cross-connect unit in the (N-1) cross-connect units, and i is an integer greater than 1 and less than (N-1); and a second port of an (N-1)^{th} cross-connect unit in the (N-1) cross-connect units is connected to an antenna corresponding to an (N-1)^{th} radio remote unit in the N radio remote units, a fourth port of the (N-1)^{th} cross-connect unit is connected to an N^{th} radio remote unit in the N radio remote units, and a third port of the (N-1)^{th} cross-connect unit is connected to an antenna corresponding to the N^{th} radio remote unit.

Manner 2: The first module includes the first submodule and the (N-1) second submodules. The first submodule is connected to each second submodule, and a first antenna is an antenna group in the N antenna groups. That each radio remote unit is connected to the first module may be: The first radio remote unit is connected to the first submodule, (N-1) radio remote units, in the N radio remote units, other than the first radio remote unit are connected to the (N-1) second submodules, and one second submodule is connected to one radio remote unit. That each antenna group is connected to the first module may be: The first antenna corresponding to the first radio remote unit is connected to the first submodule, (N-1) antenna groups, in the N antenna groups, other than the first antenna are connected to the (N-1) second submodules, and one second submodule is connected to one antenna group.

For example, the P radio remote units corresponding to the P antenna groups include the first radio remote unit, and the first module may receive the P radio frequency signals, combine the P radio frequency signals into the third radio frequency signal, and send the third radio frequency signal to the first radio frequency signal in the following manner: (P-1) second submodules connected to (P-1) antenna groups may be configured to: receive (P-1) radio frequency signals from the (P-1) antenna groups, and send the (P-1) radio frequency signals to the first submodule, where the (P-1) antenna groups are antennas, in the P antenna groups, other than the first antenna corresponding to the first radio remote unit; and the first submodule may be configured to: receive the (P-1) radio frequency signals from the (P-1) second submodules, receive one radio frequency signal from the first antenna, combine the P radio frequency signals into the third radio frequency signal, and send the third radio frequency signal to the first radio remote unit. Alternatively, the P radio remote units corresponding to the P antenna groups do not include the first radio remote unit, and the first module may receive the P radio frequency signals, combine the P radio frequency signals into the third radio frequency signal, and send the third radio frequency signal to the first radio frequency signal in the following manner: P second submodules connected to the P antenna groups may be configured to: receive the P radio frequency signals from the P antenna groups, and send the P radio frequency signals to the first submodule; and the first submodule may be configured to: receive the P radio frequency signals from the P second submodules, combine the P radio frequency signals into the third radio frequency signal, and send the third radio frequency signal to the first radio remote unit.

For example, the first submodule may include (N-1) cross-connect units, and each cross-connect unit includes a first port, a second port, a third port, and a fourth port; and that the first radio remote unit is connected to the first submodule may be: The first radio remote unit is connected to a first port of a first cross-connect unit, where the first cross-connect unit is a cross-connect unit in the (N-1) cross-connect units, a fourth port of the first cross-connect unit is grounded, a second port of the first cross-connect unit is connected to the first antenna, and a third port of the first cross-connect unit is connected to a cross-connect unit, in the (N-1) cross-connect units, other than the first cross-connect unit or connected to a second submodule in the (N-1) second submodules.

For example, N is equal to 2, a first port of the (N-1) cross-connect unit is connected to the first radio frequency unit, a fourth port of the (N-1) cross-connect unit is grounded, a second port of the (N-1) cross-connect unit is connected to the first antenna, a third port of the (N-1) cross-connect unit is connected to the (N-1) second submodule, and the (N-1) second submodule is connected to an antenna, in the N antenna groups, other than the first antenna; or N is greater than 2, a first port of a 1^{st} cross-connect unit in the (N-1) cross-connect units is connected to the first radio frequency unit, a fourth port of the 1^{st} cross-connect unit is grounded, and a second port of the 1^{st} cross-connect unit is connected to the first antenna; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an (i-1)^{th} second submodule in the (N-1) second submodules, a fourth port of the i^{th} cross-connect unit is grounded, and i is an integer greater than 1 and less than (N-1); and a first port of an (N-1)^{th} cross-connect unit in the (N-1) cross-connect units is connected to a third port of an (N-2)^{th} cross-connect unit in the (N-1) cross-connect units, a second port of the (N-1)^{th} cross-connect unit is connected to an (N-2)^{th} second submodule in the (N-1) second submodules, a fourth port of the (N-1) cross-connect units is grounded, and a third port of the (N-1) cross-connect units is connected to an (N-1)^{th} second submodule in the (N-1) second submodules.

In a possible design, the first cross-connect unit may be configured to: receive the third radio frequency signal through the third port, and send the third radio frequency signal to the first radio frequency unit through the first port; or the first cross-connect unit may be configured to: receive one radio frequency signal through the second port, receive one radio frequency signal through the third port, combine the two radio frequency signals into the third radio frequency signal, and send the third radio frequency signal to the first radio remote unit through the first port.

For beneficial effects of the apparatus in the third aspect and any possible design of the third aspect, refer to beneficial effects of the apparatus in the first aspect and any possible design of the first aspect. Details are not described herein again.

According to a fourth aspect, an embodiment of this application provides a communication method, where the communication method may be applied to a communication apparatus, and the communication apparatus may include N radio remote units, a first module, and N antenna groups, where each radio remote unit is connected to the first module, each antenna group is connected to the first module, and the N radio remote units one-to-one correspond to the N antenna groups, where N is an integer greater than 1; P antenna groups in the N antenna groups receive P radio frequency signals, and send the P radio frequency signals to the first module, where P is an integer greater than 1 and less than or equal to N; the first module receives the P radio frequency signals, combines the P radio frequency signals into a third radio frequency signal, and sends the third radio frequency signal to a first radio remote unit in the N radio remote units; and the first radio remote unit receives the third radio frequency signal.

In a possible design, load of a cell corresponding to the first radio remote unit is less than or equal to a load threshold, and load of a cell corresponding to each radio remote unit in P radio remote units corresponding to the P antenna groups is less than or equal to the load threshold. In another possible design, the N radio remote units may further include a third radio remote unit, and load of a cell corresponding to the third radio remote unit is greater than a load threshold; and the method further includes: An antenna corresponding to the third radio remote unit receives a fourth radio frequency signal, and sends the fourth radio frequency signal to the first module; the first module receives the fourth radio frequency signal, and sends the fourth radio frequency signal to the third radio remote unit; and the third radio remote unit receives the fourth radio frequency signal.

In a possible design, the method further includes: The first radio remote unit sends a first radio frequency signal to the first module; the first module receives the first radio frequency signal, divides the first radio frequency signal into M radio frequency sub-signals, and sends the M radio frequency sub-signals to M antenna groups corresponding to M radio remote units in the N radio remote units, where M is an integer greater than 1 and less than or equal to N; and the M antenna groups send the M radio frequency sub-signals.

In a possible design, the load of the cell corresponding to the first radio remote unit is less than or equal to the load threshold, and load of a cell corresponding to each radio remote unit in the M radio remote units is less than or equal to the load threshold.

In a possible design, the first module may be implemented in the following manners: Manner 1: The first module includes (N-1) cross-connect units. Manner 2: The first module includes a first submodule and (N-1) second submodules, where the first submodule includes (N-1) cross-connect units. The following separately describes the two implementations.

Manner 1: The first module includes the (N-1) cross-connect units, and each cross-connect unit includes a first port, a second port, a third port, and a fourth port; and the first module may send the third radio frequency signal to the first radio remote unit in the following manner: A first port of a first cross-connect unit sends the first radio frequency signal to the first radio remote unit, where the first cross-connect unit is a cross-connect unit in the (N-1) cross-connect units, a fourth port of the first cross-connect unit is connected to a radio remote unit, in the N radio remote units, other than the first radio remote unit, a second port of the first cross-connect unit is connected to a first antenna, and a third port of the first cross-connect unit is connected to a cross-connect unit, in the (N-1) cross-connect units, other than the first cross-connect unit or connected to an antenna group, in the N antenna groups, other than the first antenna.

For example, N is equal to 2, a first port of the (N-1) cross-connect unit is connected to the first radio frequency unit, a fourth port of the (N-1) cross-connect unit is connected to a radio remote unit, in the N radio remote units, other than the first radio remote unit, a second port of the (N-1) cross-connect unit is connected to the first antenna, and a third port of the (N-1) cross-connect unit is connected to an antenna, in the N antenna groups, other than the first antenna; or N is greater than 2, a first port of a 1^{st} cross-connect unit in the (N-1) cross-connect units is connected to a 1^{st} radio remote unit in the N radio remote units, and a second port of the 1^{st} cross-connect unit is connected to an antenna corresponding to the 1^{st} radio remote unit; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an antenna corresponding to an i^{th} radio remote unit in the N radio remote units, a fourth port of the i^{th} cross-connect unit is connected to an (i+1)^{th} radio remote unit in the N radio remote units, a third port of the i^{th} cross-connect unit is connected to a first port of an (i+1)^{th} cross-connect unit in the (N-1) cross-connect units, and i is an integer greater than 1 and less than (N-1); and a second port of an (N-1)^{th} cross-connect unit in the (N-1) cross-connect units is connected to an antenna corresponding to an (N-1)^{th} radio remote unit in the N radio remote units, a fourth port of the (N-1)^{th} cross-connect unit is connected to an N^{th} radio remote unit in the N radio remote units, and a third port of the (N-1)^{th} cross-connect unit is connected to an antenna corresponding to the N^{th} radio remote unit.

Manner 2: The first module includes the first submodule and the (N-1) second submodules. The first submodule is connected to each second submodule, and a first antenna is an antenna group in the N antenna groups. That each radio remote unit is connected to the first module may be: The first radio remote unit is connected to the first submodule, (N-1) radio remote units, in the N radio remote units, other than the first radio remote unit are connected to the (N-1) second submodules, and one second submodule is connected to one radio remote unit. That each antenna group is connected to the first module may be: The first antenna corresponding to the first radio remote unit is connected to the first submodule, (N-1) antenna groups, in the N antenna groups, other than the first antenna are connected to the (N-1) second submodules, and one second submodule is connected to one antenna group.

For example, the P radio remote units corresponding to the P antenna groups include the first radio remote unit, and that the first module receives the P radio frequency signals, combines the P radio frequency signals into a third radio frequency signal, and sends the third radio frequency signal to the first radio frequency signal may be: (P-1) second submodules connected to (P-1) antenna groups receive (P-1) radio frequency signals from the (P-1) antenna groups, and send the (P-1) radio frequency signals to the first submodule, where the (P-1) antenna groups are antennas, in the P antenna groups, other than the first antenna corresponding to the first radio remote unit; and
the first submodule receives the (P-1) radio frequency signals from the (P-1) second submodules, receives one radio frequency signal from the first antenna, combines the P radio frequency signals into the third radio frequency signal, and sends the third radio frequency signal to the first radio remote unit. Alternatively, the P radio remote units corresponding to the P antenna groups do not include the first radio remote unit, and that the first module receives the P radio frequency signals, combines the P radio frequency signals into the third radio frequency signal, and sends the third radio frequency signal to the first radio frequency signal may be: P second submodules connected to the P antenna groups receive the P radio frequency signals from the P antenna groups, and send the P radio frequency signals to the first submodule; and the first submodule receives the P radio frequency signals from the P second submodules, combines the P radio frequency signals into the third radio frequency signal, and sends the third radio frequency signal to the first radio remote unit.

For example, the first submodule may include (N-1) cross-connect units, and each cross-connect unit includes a first port, a second port, a third port, and a fourth port; and that the first radio remote unit is connected to the first submodule may be: The first radio remote unit is connected to a first port of a first cross-connect unit, where the first cross-connect unit is a cross-connect unit in the (N-1) cross-connect units, a fourth port of the first cross-connect unit is grounded, a second port of the first cross-connect unit is connected to the first antenna, and a third port of the first cross-connect unit is connected to a cross-connect unit, in the (N-1) cross-connect units, other than the first cross-connect unit or connected to a second submodule in the (N-1) second submodules.

For example, N is equal to 2, a first port of the (N-1) cross-connect unit is connected to the first radio frequency unit, a fourth port of the (N-1) cross-connect unit is grounded, a second port of the (N-1) cross-connect unit is connected to the first antenna, a third port of the (N-1) cross-connect unit is connected to the (N-1) second submodule, and the (N-1) second submodule is connected to an antenna, in the N antenna groups, other than the first antenna; or N is greater than 2, a first port of a 1^{st} cross-connect unit in the (N-1) cross-connect units is connected to the first radio frequency unit, a fourth port of the 1^{st} cross-connect unit is grounded, and a second port of the 1^{st} cross-connect unit is connected to the first antenna; a first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an (i-1)^{th} second submodule in the (N-1) second submodules, a fourth port of the i^{th} cross-connect unit is grounded, and i is an integer greater than 1 and less than (N-1); and a first port of an (N-1)^{th} cross-connect unit in the (N-1) cross-connect units is connected to a third port of an (N-2)^{th} cross-connect unit in the (N-1) cross-connect units, a second port of the (N-1)^{th} cross-connect unit is connected to an (N-2)^{th} second submodule in the (N-1) second submodules, a fourth port of the (N-1) cross-connect units is grounded, and a third port of the (N-1) cross-connect units is connected to an (N-1)^{th} second submodule in the (N-1) second submodules.

In a possible design, the method may further include: The first cross-connect unit receives the third radio frequency signal through the third port, and sends the third radio frequency signal to the first radio frequency unit through the first port; or the first cross-connect unit receives one radio frequency signal through the second port, receives one radio frequency signal through the third port, combines the two radio frequency signals into the third radio frequency signal, and sends the third radio frequency signal to the first radio remote unit through the first port.

For beneficial effects of the method in the fourth aspect and any possible design of the fourth aspect, refer to beneficial effects of the apparatus in the third aspect and any possible design of the third aspect. Details are not described herein again.

According to a fifth aspect, an embodiment of this application provides a communication apparatus, where the communication apparatus includes at least one processor and an interface circuit, and the at least one processor is configured to implement the method according to the second aspect and the possible designs of the second aspect, or implement the method according to the second aspect and the possible designs of the second aspect. The interface circuit is configured to implement communication with another communication apparatus.

According to a sixth aspect, an embodiment of this application provides a computer-readable storage medium, where the computer-readable storage medium stores instructions, and when the instructions are run on a computer, the computer is enabled to perform the method according to the second aspect and the possible designs of the second aspect, or the computer is enabled to perform the method according to the fourth aspect and the possible designs of the fourth aspect.

According to a seventh aspect, an embodiment of this application further provides a computer program product, including instructions, and when the instructions are run on a computer, the computer is enabled to perform the method according to the second aspect or any possible design of the second aspect, or the computer is enabled to perform the method according to the fourth aspect and the possible designs of the fourth aspect.

According to an eighth aspect, an embodiment of this application further provides a chip system, where the chip system includes at least one processor and an interface circuit, the processor is configured to execute instruction and/or data exchange through the interface circuit, so that an apparatus in which the chip system is located performs the method in the second aspect or any possible design of the second aspect, or the apparatus in which the chip system is located performs the method in the fourth aspect or any possible design of the fourth aspect. The chip system may include a chip, or may include a chip and another discrete component.

According to a ninth aspect, an embodiment of this application further provides a chip, where the chip is configured to read a computer program stored in a memory, to perform the method according to the second aspect or any possible design of the second aspect, or perform the method according to the fourth aspect or any possible design of the fourth aspect.

### BRIEF DESCRIPTION OF DRAWINGS

FIG. 1 is a diagram of a structure of three-sector networking according to an embodiment of this application;
FIG. 2 is a diagram of time-domain muting according to an embodiment of this application;
FIG. 3 is a diagram of frequency-domain muting according to an embodiment of this application;
FIG. 4 is a diagram of a cross-connect unit according to an embodiment of this application;
FIG. 5 is a schematic of a circuit of a cross-connect unit according to an embodiment of this application;
FIG. 6 is a diagram of a communication apparatus according to an embodiment of this application;
FIG. 7A is another diagram of a communication apparatus according to an embodiment of this application;
FIG. 7B is another diagram of a communication apparatus according to an embodiment of this application;
FIG. 8 is another diagram of a communication apparatus according to an embodiment of this application;
FIG. 9 is a diagram of a first module according to an embodiment of this application;
FIG. 10 is a diagram of a communication apparatus according to an embodiment of this application;
FIG. 11A is another diagram of a communication apparatus according to an embodiment of this application;
FIG. 11B is another diagram of a communication apparatus according to an embodiment of this application;
FIG. 12 is another diagram of a communication apparatus according to an embodiment of this application;
FIG. 13 is a diagram of a first submodule according to an embodiment of this application;
FIG. 14 is a diagram of a second submodule according to an embodiment of this application;
FIG. 15 is a schematic flowchart of a communication method according to an embodiment of this application; and
FIG. 16 is a schematic flowchart of a communication method according to an embodiment of this application.

### DESCRIPTION OF EMBODIMENTS

Terms used in embodiments of this application are merely intended to describe specific embodiments, but are not intended to limit this application. The terms "one", "a" and "this" of singular forms used in this specification and the appended claims of this application are also intended to include an expression like "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.

In embodiments of this application, "at least one" includes one or more, "at least two" includes two or more, and "a plurality of" means two or more. In addition, it should be understood that in descriptions of this application, terms such as "first" and "second" are merely used for distinguishing and description, but should not be understood as indicating or implying relative importance, or should not be understood as indicating or implying a sequence. For example, a first port, a second port, a third port, and a fourth port in the following are merely used to distinguish between four ports, and do not limit sizes, location sequences, and priorities of the four ports. For another example, a first radio frequency signal, a second radio frequency signal, and a third radio frequency signal in the following are merely used to distinguish between three radio frequency signals, and do not limit priorities of the three radio frequency signals.

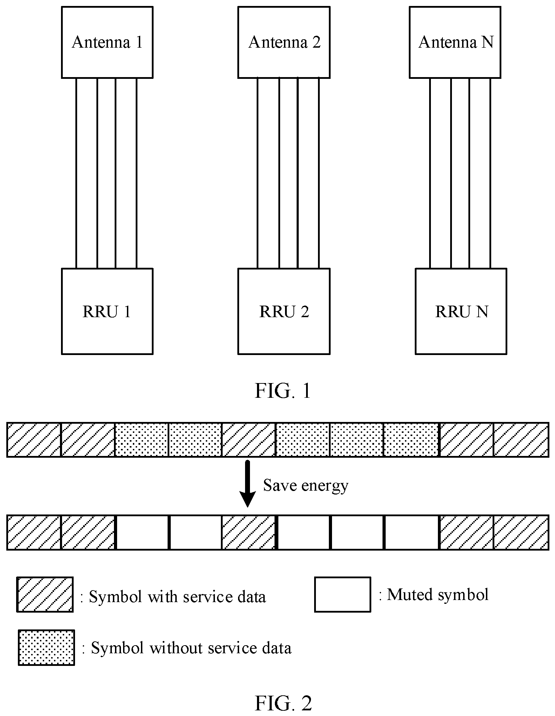

FIG. 1 is a diagram of a structure of three-sector networking. As shown in FIG. 1, the three-sector networking includes three RRUs, which are respectively denoted as an RRU 1, an RRU 2, and an RRU 3, and three antenna groups, which are respectively denoted as an antenna 1, an antenna 2, and an antenna 3. Each RRU includes four ports. The RRU 1 is connected to the antenna 1 through feeders (indicated by black lines in FIG. 1), the RRU 2 is connected to the antenna 2 through feeders, and the RRU 3 is connected to the antenna 3 through feeders. The RRU is mainly responsible for modulation and demodulation of a radio frequency signal and power amplification of a radio frequency signal. The antenna is mainly responsible for receiving and sending of an electromagnetic wave signal on a base station side. In this embodiment of this application, the RRU sends a radio frequency signal to an antenna connected to the RRU. Correspondingly, the antenna receives the radio frequency signal from the RRU, and sends the radio frequency signal.

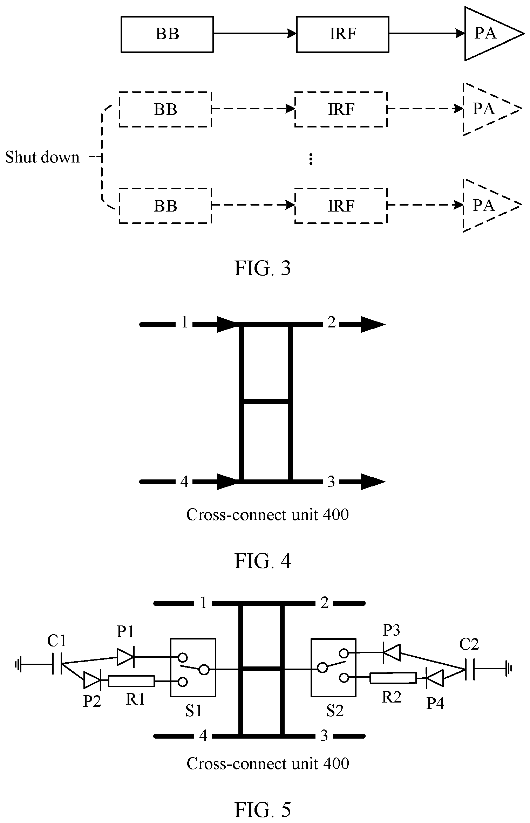

To reduce power consumption of the RRU, common energy saving methods include time-domain muting, space-domain muting, and frequency-domain energy saving. In the time-domain muting, a symbol is used as a granularity, and a symbol without service data is muted, to reduce the power consumption of the RRU, so as to save energy, as shown in FIG. 2. In the space-domain muting, a channel is used as a granularity, and in a light-load scenario, some downlink transmit channels are shut down, to reduce the power consumption of the RRU, so as to save energy, as shown in FIG. 3. In FIG. 3, for example, a downlink transmit channel includes a baseband processing unit (baseband processing unit, BB), an intermediate radio frequency unit (intermediate radio frequency unit, IRF), and a power amplifier (power amplifier, PA). In FIG. 3, a dashed line indicates a shutdown downlink transmit channel. In the frequency-domain energy saving, a carrier is used as a granularity, and carriers corresponding to some frequency bands or frequencies are shut down in frequency domain, to reduce the power consumption of the RRU, so as to save energy.

With development of a multi-antenna technology, the RRU is usually in a multi-channel collaboration mode, and basic power consumption accounts for a large proportion. Common fine-grained energy saving methods such as the time-domain muting, the space-domain muting, and the frequency-domain energy saving cannot reduce basic power consumption of the RRU.

In view of this, embodiments of this application provide a communication method and apparatus, to drive a plurality of antenna groups by one RRU through one or more cross-connect units, so that at least one of a plurality of RRUs corresponding to the plurality of antenna groups is in an idle state or a non-working state, to reduce basic power consumption of the RRU, so as to save energy. That the RRU is in the idle state may be understood as that the RRU maintains a to-be-woken-up state with low power consumption. That the RRU is in the non-working state may be understood as that the RRU is in a deep energy saving state or a power-off state.

The communication method provided in this application may be applied to various communication systems, for example, a long term evolution (long term evolution, LTE) system, a frequency division duplex (frequency division duplex, FDD) system, a time division duplex (time division duplex, TDD) system, a full-duplex system, a 5th generation (5th generation, 5G) mobile communication system, an internet of things (internet of things, IoT) system, a V2X system, a narrow band internet of things (narrow band internet of things, NB-IoT) system, an LTE and 5G hybrid architecture, and a new radio (new radio, NR) system, or applied to a future communication system or another similar communication system. The communication method provided in embodiments of this application may be used provided that the communication system involves an RRU.

The RRU in embodiments of this application may be deployed in a macro base station, or may be deployed in a micro base station, an indoor base station, a high-frequency base station, or the like. A specific technology and a specific device form that are used by the RRU are not limited in embodiments of this application.

As mentioned above, in embodiments of this application, one RRU may drive a plurality of antenna groups through one or more cross-connect units. For ease of understanding, the following first describes a cross-connect unit provided in embodiments of this application. The cross-connect unit may also be referred to as a cross-connect switcher, a cross-connect module, or the like. A name of the cross-connect unit is not limited in embodiments of this application.

FIG. 4 is a diagram of a cross-connect unit according to an embodiment of this application. As shown in FIG. 4, a cross-connect unit 400 includes four ports. The four ports may be respectively denoted as a first port (marked as "1" in FIG. 4), a second port (marked as "2" in FIG. 4), a third port (marked as "3" in FIG. 4) and a fourth port (marked as "4" in FIG. 4). The first port and the fourth port may be used as input ports, and the second port and the third port may be used as output ports; or the first port and the fourth port may be used as output ports, and the second port and the third port may be used as input ports. In FIG. 4, for example, the first port and the fourth port are input ports, and the second port and the third port are output ports. The cross-connect unit 400 may implement the following working states through the four ports: a bar state, a cross-connect state, a power division state, and a combination state.

The bar state means that a radio frequency signal input through the first port is output through the second port, and/or a radio frequency signal input through the fourth port is output through the third port; or a radio frequency signal input through the second port is output through the first port, and/or a radio frequency signal input through the third port is output through the fourth port.

The cross-connect state means that a radio frequency signal input through the first port is output through the third port, and/or a radio frequency signal input through the fourth port is output through the second port; or a radio frequency signal input through the second port is output through the fourth port, and/or a radio frequency signal input through the third port is output through the first port.

The power division state means that a radio frequency signal input through the first port or the fourth port is divided into two radio frequency sub-signals, one of the two radio frequency sub-signals is output through the second port, and the remaining one radio frequency sub-signal is output through the third port. The cross-connect unit 400 in the power division state may divide one radio frequency signal into two radio frequency sub-signals. For example, the cross-connect unit 400 may divide one radio frequency signal into two radio frequency sub-signals in a power division manner. However, this is not limited in embodiments this application. Output powers of the two radio frequency sub-signals may be equally distributed, or may be unequally distributed, for example, preset as required.

The combination state means that a radio frequency signal input through the second port and a radio frequency signal input through the third port are combined into one radio frequency signal, and the one radio frequency signal is output through the first port or the fourth port. The cross-connect unit 40 in the combination state may combine two radio frequency signals into one radio frequency signal. For example, the cross-connect unit 400 may combine two radio frequency signals into one radio frequency signal in a time division manner or a frequency division manner. However, this is not limited in embodiments this application.

It should be noted that the term "port" in embodiments of this application may be replaced with an "interface", a "pin", or the like.

In an example, FIG. 5 is a schematic of a circuit of a cross-connect unit according to an embodiment of this application. As shown in FIG. 5, the cross-connect unit 400 includes two switches (for example, radio frequency switches, respectively denoted as S1 and S2), four diodes (respectively denoted as P1, P2, P3, and P4), two microstrip lines (for example, quarter-wave microstrip lines, respectively denoted as R1 and R2), and two capacitors (respectively denoted as C1 and C2). The switch S1 is connected to the first port and the fourth port, the switch S1 is connected to the diode P1 and the microstrip line R1, the diode P1 is connected in parallel to the microstrip line R1, the microstrip line R1 is connected in series to the diode P2, one side of the capacitor C1 is connected to the diode P1 and the diode P2, and the other side of the capacitor C1 is grounded. The switch S2 is connected to the second port and the third port, the switch S2 is connected to the diode P3 and the microstrip line R2, the diode P3 is connected in parallel to the microstrip line R2, the microstrip line R2 is connected in series to the diode P4, one side of the capacitor C2 is connected to the diode P3 and the diode P4, and the other side of the capacitor C2 is grounded.

The cross-connect unit 400 may control working states of the switch S1, the switch S2, the diode P1, the diode P2, the diode P3, and the diode P4, to implement switching among the bar state, the cross-connect state, the power division state, and the combination state.

For example, the switch S1 selects the diode P2, the switch S2 selects the diode P4, and both the diode P2 and the diode P4 are in a negative bias voltage cut-off state. In this case, the cross-connect unit 400 is in the bar state, that is, a radio frequency signal input through the first port is output through the second port, and a radio frequency signal input through the fourth port is output through the third port.

For another example, the switch S1 selects the diode P1, the switch S2 selects the diode P3, and both the diode P1 and the diode P3 are in a negative bias voltage cut-off state. In this case, the cross-connect unit 400 is in the cross-connect state, that is, a radio frequency signal input through the first port is output through the third port, and a radio frequency signal input through the fourth port is output through the second port.

For another example, the switch S1 selects the diode P2, the switch S2 selects the diode P4, both the diode P2 and the diode P4 are in a positive bias voltage conduction state, and the capacitor C1 and the capacitor C2 may be used as loaded capacitors to change a phase state of the cross-connect unit 400. In this case, the cross-connect unit 400 may be in the power division state, that is, a radio frequency signal input through the first port or the fourth port is divided into two radio frequency sub-signals, one of the two radio frequency sub-signals is output through the second port, and the remaining one radio frequency sub-signal is output through the third port.

For another example, the switch S1 selects the diode P2, the switch S2 selects the diode P4, both the diode P2 and the diode P4 are in a positive bias voltage conduction state, and the capacitor C1 and the capacitor C2 may be used as loaded capacitors to change a phase state of the cross-connect unit 400. In this case, the cross-connect unit 400 may be in the combination state, that is, a radio frequency signal input through the second port and a radio frequency signal input through the third port are combined into one radio frequency signal, and the signal is output through the first port or the fourth port.

It should be noted that, when the cross-connect unit 400 is in the power division state and in the combination state, working manners of components in the cross-connect unit 400 may be the same, and a difference lies in that if a radio frequency signal is input from the first port or the fourth port, the cross-connect unit 400 is in the power division state; or if radio frequency signals are input from the second port and the third port, the cross-connect unit 400 is in the combination state. Certainly, when the cross-connect unit 400 is in the power division state and the combination state, working manners of components in the cross-connect unit 400 may alternatively be different. This is not limited in embodiments this application.

It should be understood that a circuit structure in FIG. 5 is merely an example, and this is not limited in embodiments of this application.

The following describes a communication apparatus provided in embodiments of this application.

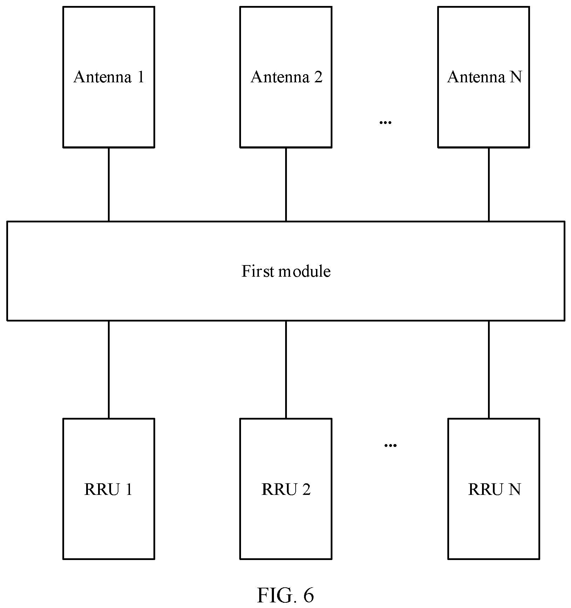

FIG. 6 is a diagram of a communication apparatus according to an embodiment of this application. As shown in FIG. 6, the communication apparatus includes N RRUs, a first module, and N antenna groups. Each RRU in the N RRUs is connected to the first module, for example, connected through a feeder. The first module is connected to each of the N antenna groups, for example, connected through a feeder. Herein, N is an integer greater than 1 (in FIG. 6, an example in which N is greater than or equal to 3 is used). The N RRUs one-to-one correspond to the N antenna groups. That the N RRUs one-to-one correspond to the N antenna groups means that one RRU in the N RRUs corresponds to one antenna group in the N antenna groups, and one antenna group in the N antenna groups corresponds to one RRU in the N RRUs. It is assumed that the N RRUs include an RRU 1, and the RRU 1 corresponds to an antenna 1 in the N antenna groups. It may be understood that during deployment, a radio frequency signal of the RRU 1 is used to drive the antenna 1. FIG. 1 is used as an example, the RRU 1 corresponds to the antenna 1, the RRU 2 corresponds to the antenna 2, and the RRU 3 corresponds to the antenna 3.

The communication apparatus may send a signal, or may receive a signal, or may send a signal and receive a signal. When the communication apparatus can send a signal and receive a signal, the communication apparatus may first send the signal and then receive the signal, or first receive the signal and then send the signal. This is not limited in embodiments this application.

In a possible implementation, the communication apparatus may send a signal. In this case, it is assumed that the N RRUs include a first RRU. The first RRU may be configured to send a first radio frequency signal to the first module. The first module may be configured to: receive the first radio frequency signal from the first RRU, divide the first radio frequency signal into M radio frequency sub-signals, and send the M radio frequency sub-signals to M antenna groups corresponding to M RRUs in the N RRUs, where M is an integer greater than 1 and less than or equal to N. The M antenna groups may be configured to: receive the M radio frequency sub-signals from the first module, and send the M radio frequency sub-signals. The M radio frequency sub-signals may be radio frequency sub-signals obtained by performing power division on the first radio frequency signal one or more times. However, this is not limited in embodiments of this application. In the foregoing implementation, a radio frequency signal of the first RRU is divided into a plurality of radio frequency sub-signals, and a plurality of antenna groups send the plurality of radio frequency sub-signals, so that one RRU drives two or more antenna groups. This breaks a mode in which one RRU drives one antenna group, so that one or more RRUs are in an idle state or a non-working state, and basic power consumption of the RRU can be reduced by using an RRU as a granularity.

In an example, load of a cell corresponding to the first RRU is less than or equal to a load threshold, and load of a cell corresponding to each RRU in the M RRUs is also less than or equal to the load threshold. The M RRUs may include the first RRU. In this case, the radio frequency sub-signal of the radio frequency signal of the first RRU may be used to drive an antenna corresponding to the first RRU. Alternatively, the M RRUs may not include the first RRU. In this case, the radio frequency sub-signal of the radio frequency signal of the first RRU is not used to drive an antenna corresponding to the first RRU.

The cell corresponding to the RRU may be understood as a cell served by the RRU, or a cell covered by the RRU, or a cell served by an antenna corresponding to the RRU, or a cell covered by the antenna corresponding to the RRU, or the like. The load threshold may be predefined by a system, or may be set by a user. This is not limited in embodiments this application. For example, the load threshold may be 30% or 50%. The RRU may correspond to one or more cells. If the RRU corresponds to a plurality of cells, the load of the cell corresponding to the RRU may be understood as average load of the plurality of cells corresponding to the RRU, or the like. However, this is not limited in embodiments this application.

For example, the first module may divide the first radio frequency signal into the M radio frequency sub-signals based on load corresponding to each RRU in the N RRUs. For example, the first module may determine, based on the load of the cell corresponding to each RRU in the N RRUs, an RRU that may be in the idle state or the non-working state, and determine, based on a quantity of RRUs that need to be in the idle state or the non-working state, a quantity of radio frequency sub-signals into which the first radio frequency signal is divided. For example, if the load of the cell corresponding to the RRU is less than or equal to the load threshold, the first module determines that the RRU may be in the idle state or the non-working state. For another example, if the load value of the RRU is greater than the load threshold, the first module determines that the RRU cannot be in the idle state or the non-working state.

It is assumed that the first module determines, based on the load corresponding to each RRU in the N RRUs, that load of a cell corresponding to each RRU in Q RRUs in the N RRUs is less than or equal to a load threshold, that is, the Q RRUs may be in the idle state or the non-working state. Q is an integer greater than or equal to M and less than or equal to N. Further, the first module may select one RRU from the Q RRUs as the first RRU, and select, from the remaining (Q-1) RRUs, M RRUs (in this case, the first RRU does not drive the antenna corresponding to the first RRU) or (M-1) RRUs (in this case, the first RRU drives the antenna corresponding to the first RRU).

In another example, it is assumed that a second RRU is an RRU, in the N RRUs, other than the Q RRUs, that is, load of a cell corresponding to the second RRU is greater than the load threshold. The second RRU may be configured to send a second radio frequency signal to the first module. The first module may be configured to: receive the second radio frequency signal from the second RRU, and send the second radio frequency signal to a second antenna corresponding to the second RRU. The second antenna is configured to send the second radio frequency signal. In this example, the RRU in the communication apparatus may also drive, through the first module, an antenna corresponding to the RRU. Therefore, compatibility is good, and a service requirement of a cell corresponding to the RRU can be ensured.

In the foregoing implementation, the communication apparatus may send a signal. In another possible implementation, the communication apparatus may receive a signal. In this case, it is assumed that the N RRUs include the first RRU. P antenna groups in the N antenna groups may be configured to: receive P radio frequency signals, and send the P radio frequency signals to the first module, where one antenna group receives one radio frequency signal, and P is an integer greater than 1 and less than or equal to N. The first module may be configured to: receive the P radio frequency signals from the P antenna groups, combine the P radio frequency signals into a third radio frequency signal, and send the third radio frequency signal to the first RRU. The first RRU may be configured to receive the third radio frequency signal from the first module. The third radio frequency signal may be a radio frequency signal obtained by combining the P radio frequency signals in a time division manner, a frequency division manner, or the like. However, this is not limited in embodiments of this application. In the foregoing implementation, a plurality of radio frequency signals from a plurality of antenna groups are combined into one radio frequency signal, and the radio frequency signal is sent to one RRU, so that one RRU can receive radio frequency signals from two or more antenna groups. This breaks a mode in which one RRU receives a radio frequency signal from one antenna group, so that one or more RRUs are in the idle state or the non-working state, and basic power consumption of the RRU can be reduced by using an RRU as a granularity.

In an example, load of a cell corresponding to the first RRU is less than or equal to a load threshold, and load of a cell corresponding to each RRU in P RRUs is also less than or equal to the load threshold. The P RRUs may include the first RRU. In this case, the first RRU may receive a radio frequency signal from an antenna corresponding to the first RRU. Alternatively, the P RRUs may not include the first RRU. In this case, the first RRU does not receive a radio frequency signal from an antenna corresponding to the first RRU. For the cell corresponding to the RRU, the load threshold, and the like, refer to the foregoing descriptions. Details are not described herein again.

For example, the first module may combine, based on load corresponding to each RRU in the N RRUs, the P radio frequency signals of the P antenna groups corresponding to the P RRUs into the third radio frequency signal. For example, the first module may determine, based on the load of the cell corresponding to each RRU in the N RRUs, an RRU that may be in the idle state or the non-working state, and determine, based on a quantity of RRUs that need to be in the idle state or the non-working state, a quantity of antenna groups of to-be-combined radio frequency signals. For example, if the load of the cell corresponding to the RRU is less than or equal to the load threshold, the first module determines that the RRU may be in the idle state or the non-working state. For another example, if the load value of the RRU is greater than the load threshold, the first module determines that the RRU cannot be in the idle state or the non-working state.

It is assumed that the first module determines, based on the load corresponding to each RRU in the N RRUs, that load of a cell corresponding to each RRU in Q RRUs in the N RRUs is less than or equal to a load threshold, that is, the Q RRUs may be in the idle state or the non-working state. Q is an integer greater than or equal to M and less than or equal to N. Further, the first module may select one RRU from the Q RRUs as the first RRU, to receive a radio frequency signal; and select, from the remaining (Q-1) RRUs, the P RRUs (in this case, the first RRU does not receive the radio frequency signal from the antenna corresponding to the first RRU) or (M-1) RRUs (in this case, the first RRU receives the radio frequency signal from the antenna corresponding to the first RRU), to use, as the to-be-combined radio frequency signals, the P radio frequency signals of the P antenna groups corresponding to the P RRUs.

In another example, it is assumed that a third RRU is an RRU, in the N RRUs, other than the Q RRUs, that is, load of a cell corresponding to the third RRU is greater than the load threshold. An antenna corresponding to the third RRU may be configured to: receive a fourth radio frequency signal, and send the fourth radio frequency signal to the first module. The first module may be configured to: receive the fourth radio frequency signal from the antenna corresponding to the third RRU, and send the fourth radio frequency signal to the third RRU. The fourth radio frequency signal is configured to receive the fourth radio frequency signal from the first module. In this example, the RRU in the communication apparatus may also receive, through the first module, a radio frequency signal from an antenna corresponding to the RRU. Therefore, compatibility is good, and a service requirement of a cell corresponding to the RRU can be ensured.

Optionally, the communication apparatus may further include a controller (not shown in FIG. 6). The controller may be configured to control the first module to divide the first radio frequency signal into the M radio frequency sub-signals, or may be configured to control the first module to combine the P radio frequency signals into the third radio frequency signal, or may be configured to: control the first radio frequency signal to be divided into the M radio frequency sub-signals, and control the first module to combine the P radio frequency signals into the third radio frequency signal. The controller may be integrated into the first module, or may not be integrated into the first module. This is not limited in embodiments this application.

The first module in the communication apparatus may be configured to: divide the first radio frequency signal into the M radio frequency sub-signals, and/or combine the P radio frequency signals into the third radio frequency signal. For example, the first module may divide the first radio frequency signal into the M radio frequency sub-signals through one or more cross-connect units, and/or combine the P radio frequency signals into the third radio frequency signal through the one or more cross-connect units. The cross-connect unit is shown in FIG. 4 or FIG. 5, and is not described herein again. For example, the first module may be implemented in the following manners: Manner 1: The first module includes (N-1) cross-connect units. Manner 2: The first module includes a first submodule and (N-1) second submodules, where the first submodule includes (N-1) cross-connect units. The following separately describes the two implementations.

Manner 1: The first module may include the (N-1) cross-connect units. It is assumed that the (N-1) cross-connect units include a first cross-connect unit. The first RRU is connected to a first port of the first cross-connect unit. Correspondingly, the first RRU may send the first radio frequency signal to the first port of the first cross-connect unit. In this embodiment of this application, a fourth port of the first cross-connect unit may be connected to an RRU, in the N RRUs, other than the first RRU, and may be configured to receive a radio frequency signal of the RRU. A second port of the first cross-connect unit may be connected to a first antenna corresponding to the first RRU, to send the first radio frequency signal or the radio frequency sub-signal of the first radio frequency signal to the first antenna. A third port of the first cross-connect unit may be connected to a first port of a cross-connect unit, in the (N-1) cross-connect units, other than the first cross-connect unit, to send the first radio frequency signal or the radio frequency sub-signal of the first radio frequency signal to the first port of the cross-connect unit; or a third port of the first cross-connect unit may be connected to an antenna group, in the N antenna groups, other than the first antenna, to send the radio frequency sub-signal of the first radio frequency signal to the antenna group.

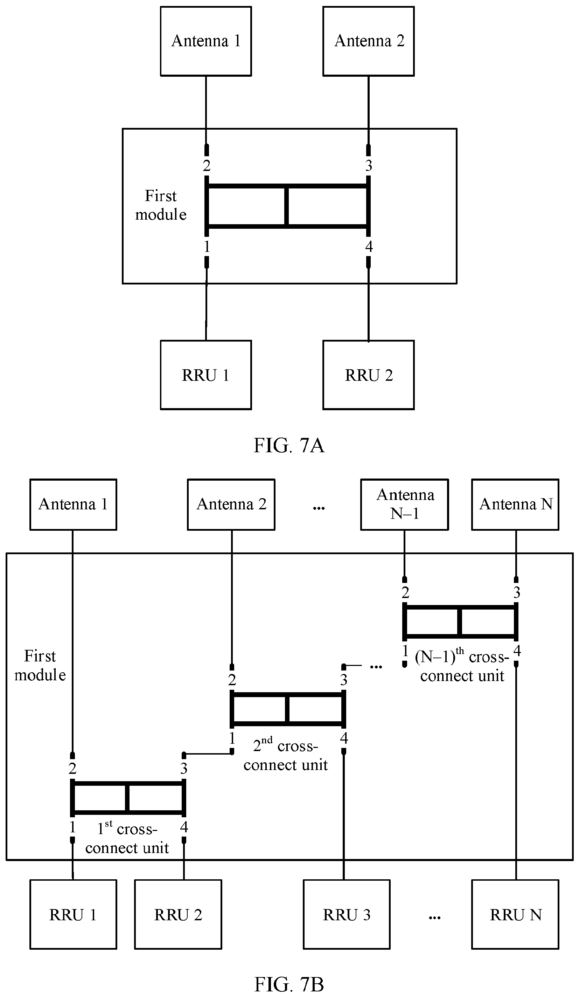

In FIG. 7A, a diagram of a communication apparatus is shown by using an example in which N is equal to 2, the first RRU is the RRU 1, the first antenna is the antenna 1, the remaining RRU is the RRU 2, and the remaining antenna is the antenna 2. As shown in FIG. 7A, the first module includes one cross-connect unit, where a first port of the cross-connect unit is connected to the RRU 1, a fourth port of the cross-connect unit is connected to the RRU 2, a second port of the cross-connect unit is connected to the antenna 1, and a third port of the cross-connect unit is connected to the antenna 2. In a case of signal sending, the first radio frequency signal from the RRU 1 is received through the first port of the cross-connect unit, the first radio frequency signal is divided into two radio frequency sub-signals, one of the two radio frequency sub-signals is sent to the antenna 1 corresponding to the RRU 1, and the remaining one radio frequency sub-signal is sent to the antenna 2 corresponding to the RRU 2. In this way, the RRU 2 does not need to drive the antenna 2, so that the RRU 2 can be switched to be in the idle state or the non-working state, to reduce basic power consumption of the RRU. In a case of signal receiving, a radio frequency signal from the antenna 1 is received through the second port of the cross-connect unit, a radio frequency signal from the antenna 3 is received through the third port of the cross-connect unit, the two radio frequency signals are combined into one radio frequency signal, and the radio frequency signal is sent to the RRU 1 through the first port. In this way, the RRU 2 does not need to receive a radio frequency signal from the antenna corresponding to the RRU 2, and the RRU 2 can be switched to be in the idle state or the non-working state, to reduce basic power consumption of the RRU.

In FIG. 7B, another diagram of a communication apparatus is shown by using an example in which N is greater than 2. As shown in FIG. 7B, the first module includes two or more cross-connect units. A first port of a 1^{st} cross-connect unit in the (N-1) cross-connect units is connected to a 1^{st} RRU (denoted as the RRU 1) in the N RRUs, a second port of the 1^{st} cross-connect unit is connected to an antenna (denoted as the antenna 1) corresponding to the RRU 1, a fourth port of the 1^{st} cross-connect unit is connected to a 2^{nd} RRU (denoted as the RRU 2) in the N RRUs, and a third port of the 1^{st} cross-connect unit is connected to a first port of a 2^{nd} cross-connect unit in the (N-1) cross-connect units. A first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an antenna corresponding to an i^{th} RRU in the N RRUs, a fourth port of the i^{th} cross-connect unit is connected to an (i+1)^{th} RRU in the N RRUs, and a third port of the i^{th} cross-connect unit is connected to a first port of an (i+1)^{th} cross-connect unit in the (N-1) cross-connect units. Herein, i is an integer greater than 1 and less than (N-1). A first port of an (N-1)^{th} cross-connect unit in the (N-1) cross-connect units is connected to a third port of an (N-2)^{th} cross-connect unit in the (N-1) cross-connect units, a second port of the (N-1)^{th} cross-connect unit is connected to an antenna corresponding to an (N-1)^{th} RRU in the N RRUs, a fourth port of the (N-1) cross-connect units is connected to an N^{th} RRU in the N RRUs, and a third port of the (N-1) cross-connect units is connected to an antenna corresponding to the N^{th} RRU.

It should be understood that, in the communication apparatus shown in FIG. 7B, the first RRU in this embodiment of this application may be any one of the 1^{st} RRU to the (N-1)^{th} RRU in the N RRUs. In the case of signal sending, the first cross-connect unit connected to the first RRU may receive the first radio frequency signal through the first port and send the first radio frequency signal through the third port; or may receive the first radio frequency signal through the first port, divide the first radio frequency signal into two radio frequency sub-signals, send one of the radio frequency sub-signals through the second port, and send the remaining one radio frequency sub-signal through the third port. In the case of signal receiving, the first cross-connect unit connected to the first RRU may receive the third radio frequency signal through the third port, and send the third radio frequency signal to the first RRU through the first port of the first cross-connect unit; or the first cross-connect unit connected to the first RRU may receive a radio frequency signal of the first antenna through the second port, receive one radio frequency signal through the third port, combine the two radio frequency signals into the third radio frequency signal, and send the third radio frequency signal to the first RRU through the first port of the first cross-connect unit.

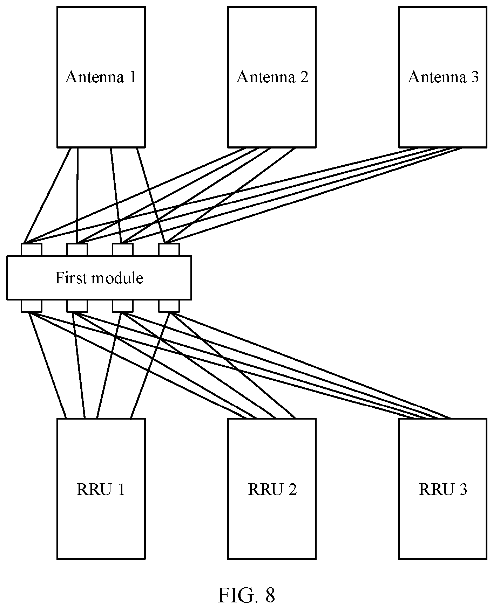

For ease of understanding this application, an example in which the RRU includes one port is used in the communication apparatuses shown in FIG. 6, FIG. 7A, and FIG. 7B. In a possible implementation, the RRU may support a plurality of ports. For example, it is assumed that the RRU supports H ports, the first module may include two groups of ports, and each group of ports includes H ports. Each of the N antenna groups includes H ports. H is an integer greater than or equal to 1. It is assumed that the two groups of ports of the first module are denoted as a 1^{st} group of ports and a 2^{nd} group of ports, a j^{th} port in the 1^{st} group of ports is connected to a j^{th} port of each RRU in the N RRUs, and a j^{th} port in the 2^{nd} group of ports is connected to a j^{th} port of each antenna group in the N antenna groups, as shown in FIG. 8. Herein, j is an integer greater than 0 and less than or equal to H. In FIG. 8, an example in which the RRU supports four ports and N is equal to 3 is used.

In the communication apparatus shown in FIG. 8, the first module may include H groups of cross-connect networks, where each group of cross-connect networks includes (N-1) cross-connect units. For a connection manner of the (N-1) cross-connect units, refer to a connection manner of the (N-1) cross-connect units in FIG. 7A or FIG. 7B. Details are not described herein again. The H groups of cross-connect networks one-to-one correspond to the H ports, that is, one group of cross-connect networks in the H groups of cross-connect networks corresponds to one port in the H ports, and one port in the H ports also corresponds to one group of cross-connect networks in the H groups of cross-connect networks. A k^{th} cross-connect network in the H groups of cross-connect networks is connected to a k^{th} port of each RRU in the N RRUs, and the k^{th} cross-connect network is connected to a k^{th} port of each antenna group in the N antenna groups. Herein, k is an integer greater than 0 and less than or equal to H.

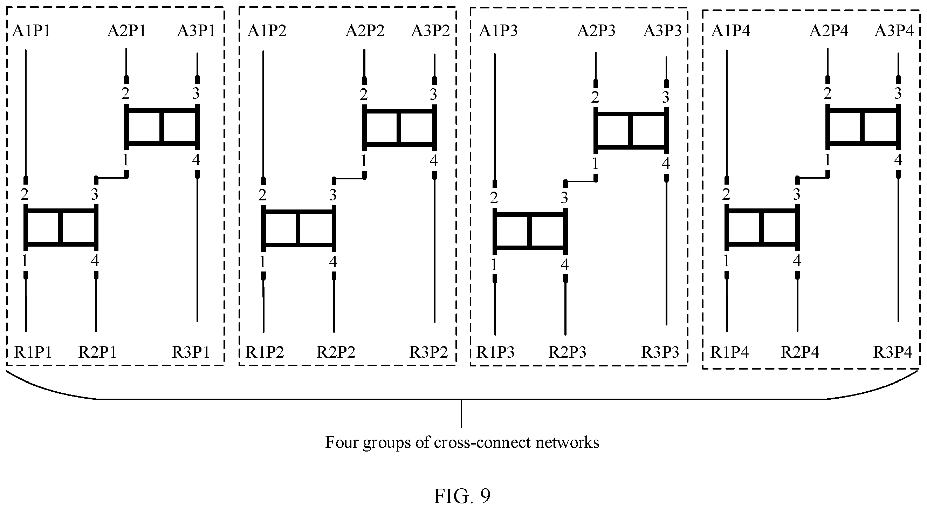

For example, a connection relationship between (N-1) cross-connect units in the k^{th} cross-connect network, the N RRUs, and the N antenna groups may be as follows: A first port of a 1^{st} cross-connect unit in the (N-1) cross-connect units is connected to a k^{th} port of a 1^{st} RRU in the N RRUs; a second port of an x^{th} cross-connect unit in the (N-1) cross-connect units is connected to a k^{th} port of an antenna corresponding to an x^{th} RRU in the N RRUs; a fourth port of the x^{th} cross-connect unit is connected to a k^{th} port of an (x+l)^{th} RRU in the N RRUs, where x is an integer greater than 0 and less than N; and a third port of an (N-1)^{th} cross-connect unit in the (N-1) cross-connect units is connected to a k^{th} port of an antenna corresponding to an N^{th} RRU, as shown in FIG. 9. In FIG. 9, an example in which the RRU supports four ports and N is equal to 3 is used. In FIG. 9, R1P1 indicates a 1^{st} port of the RRU 1, and A1P1 indicates a 1^{st} port of the antenna 1. Others are similar, and are not described herein one by one.

The foregoing describes Manner 1 for implementing the first module, and the following describes Manner 2 for implementing the first module.

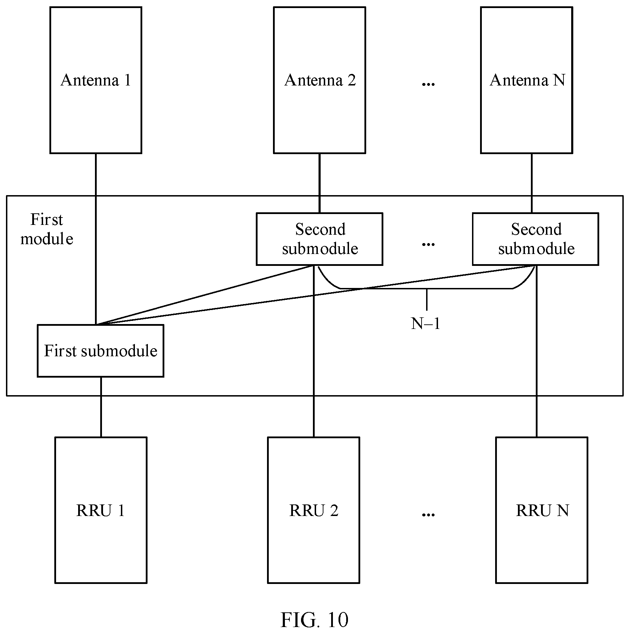

Manner 2: The first module includes a first submodule and (N-1) second submodules, where the first submodule is connected to each second submodule in the (N-1) second submodules, as shown in FIG. 10. The first submodule is connected to the first RRU, and the first submodule is further connected to a first antenna corresponding to the first RRU. The (N-1) second submodules are connected to (N-1) RRUs, in the N RRUs, other than the first RRU, where one second submodule is connected to one RRU. The (N-1) second submodules are further connected to (N-1) antenna groups corresponding to the (N-1) RRUs, and one second submodule is connected to one antenna group.

In a case of signal sending, the first module may receive the first radio frequency signal from the first RRU, divide the first radio frequency signal into the M radio frequency sub-signals, and send the M radio frequency sub-signals to the M antenna groups corresponding to the M RRUs. The M RRUs may include the first RRU, or may not include the first RRU.

For example, if the M RRUs include the first RRU, the first submodule may be configured to: receive the first radio frequency signal from the first RRU, divide the first radio frequency signal into the M radio frequency sub-signals, send one radio frequency sub-signal to the first antenna corresponding to the first RRU, and send the remaining (M-1) radio frequency sub-signals to (M-1) second submodules connected to the (M-1) RRUs, where the (M-1) RRUs are RRUs, in the M RRUs, other than the first RRU. The (M-1) second submodules may be configured to send the (M-1) radio frequency sub-signals to (M-1) antenna groups corresponding to the (M-1) RRUs.

For another example, if the M RRUs do not include the first RRU, the first submodule may be configured to: receive the first radio frequency signal from the first RRU, divide the first radio frequency signal into the M radio frequency sub-signals, and send the M radio frequency sub-signals to M second submodules connected to the M RRUs. The M second submodules may be configured to send the M radio frequency sub-signals to the M antenna groups corresponding to the M RRUs.

For a specific implementation in which the first submodule divides the first radio frequency signal into the M radio frequency sub-signals, refer to the foregoing related descriptions in which the first module divides the first radio frequency signal into the M radio frequency sub-signals. Details are not described herein again.

In a case of signal receiving, the first module may receive the P radio frequency signals from the P antenna groups corresponding to the P RRUs, combine the P radio frequency signals into the third radio frequency signal, and send the third radio frequency signal to the first RRU. The P RRUs may include the first RRU, or may not include the first RRU.

For example, if the P RRUs include the first RRU, (P-1) second submodules connected to (P-1) antenna group may be configured to: receive (P-1) radio frequency signals from the (P-1) antenna group, and send the (P-1) radio frequency signals to the first submodule, where the (P-1) antenna group are antennas corresponding to (P-1) RRUs, and the (P-1) RRUs are RRUs, in the P RRUs, other than the first RRU. The first submodule may be configured to: receive a radio frequency signal from the first antenna corresponding to the first RRU, receive the (P-1) radio frequency signals from the (P-1) second submodules, combine the P radio frequency signals into the third radio frequency signal, and send the third radio frequency signal to the first RRU. Correspondingly, the first RRU is configured to receive the third radio frequency signal.

For another example, if the P RRUs do not include the first RRU, P second submodules connected to the P antenna groups may be configured to: receive the P radio frequency signals from the P antenna groups, and send the P radio frequency signals to the first submodule, where the P antenna groups are antennas corresponding to the P RRUs. The first submodule may be configured to: receive the P radio frequency signals from the P second submodules, combine the P radio frequency signals into the third radio frequency signal, and send the third radio frequency signal to the first RRU. Correspondingly, the first RRU is configured to receive the third radio frequency signal.

For a specific implementation in which the first submodule combines the P radio frequency signals into the third radio frequency signal, refer to the foregoing related descriptions in which the first module combines the P radio frequency signals into the third radio frequency signal. Details are not described herein again.

The first submodule may include (N-1) cross-connect units. The cross-connect unit is shown in FIG. 4 and FIG. 5, and is not described herein again. The following describes a connection manner between the (N-1) cross-connect units in the first submodule.

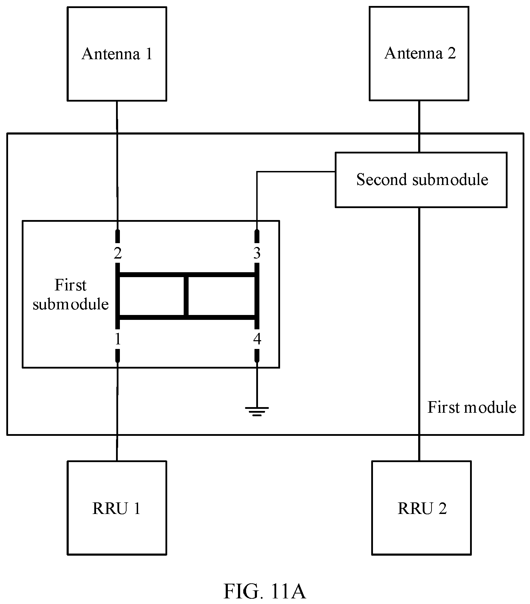

In FIG. 11A, a diagram of a communication apparatus is shown by using an example in which N is equal to 2, the first RRU is the RRU 1, the first antenna is the antenna 1, the remaining RRU is the RRU 2, and the remaining antenna is the antenna 2. As shown in FIG. 11A, the first submodule includes one cross-connect unit. In this case, a first port of the cross-connect unit is connected to the RRU 1, a second port of the cross-connect unit is connected to the antenna 1, a fourth port of the cross-connect unit is grounded, a third port of the cross-connect unit is connected to the second submodule, the second submodule is connected to the RRU 2, and the second submodule is further connected to the antenna 2. In a case of signal sending, the first radio frequency signal from the RRU 1 is received through the first port of the cross-connect unit, the first radio frequency signal is divided into two radio frequency sub-signals, one of the two radio frequency sub-signals is sent to the antenna 1 corresponding to the RRU 1, the remaining one radio frequency sub-signal is sent to the second submodule, and then the second submodule sends the signal to the antenna 2 corresponding to the RRU 2. In this way, the RRU 2 does not need to drive the antenna 2, so that the RRU 2 can be switched to be in the idle state or the non-working state, to reduce basic power consumption of the RRU. In a case of signal receiving, a radio frequency signal of the second submodule is received through the third port of the cross-connect unit, a radio frequency signal of the antenna 1 is received through the second port of the cross-connect unit, the two radio frequency signals are combined into the third radio frequency signal, and the third radio frequency signal is sent to the first RRU through the first port. In this way, the RRU 2 does not need to receive a radio frequency signal from the antenna corresponding to the RRU 2, and the RRU 2 can be switched to be in the idle state or the non-working state, to reduce basic power consumption of the RRU.

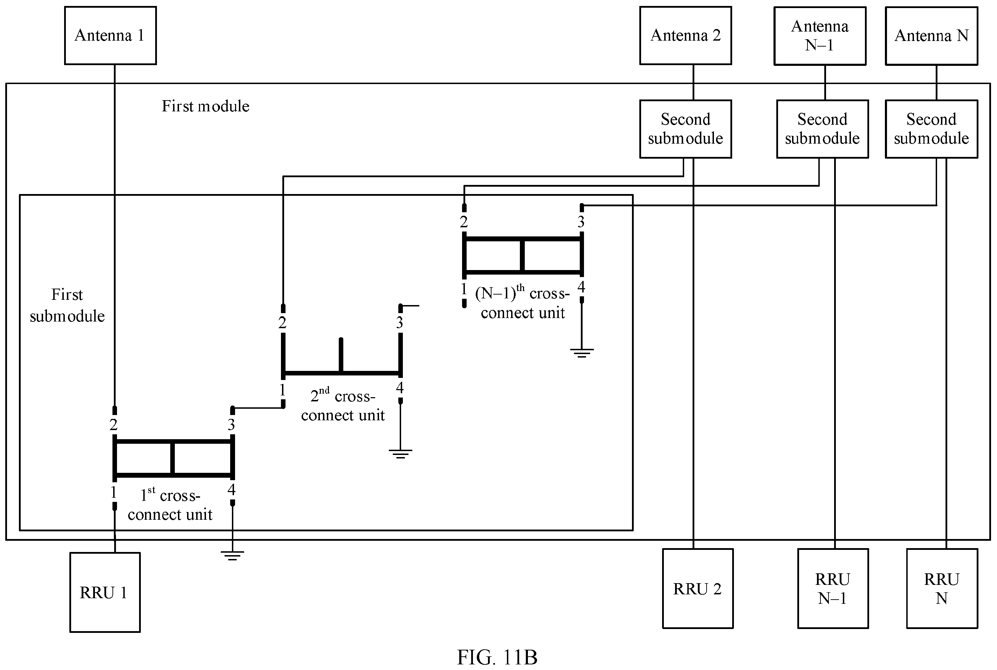

In FIG. 11B, another diagram of a communication apparatus is shown by using an example in which N is greater than 2. As shown in FIG. 11B, the first submodule includes two or more cross-connect units. A first port of a 1^{st} cross-connect unit in the (N-1) cross-connect units is connected to a 1^{st} RRU (denoted as the RRU 1) in the N RRUs, a second port of the 1^{st} cross-connect unit is connected to an antenna (denoted as the antenna 1) corresponding to the 1^{st} RRU, a fourth port of the 1^{st} cross-connect unit is grounded, and a third port of the 1^{st} cross-connect unit is connected to a first port of a 2^{nd} cross-connect unit in the (N-1) cross-connect units. A first port of an i^{th} cross-connect unit in the (N-1) cross-connect units is connected to a third port of an (i-1)^{th} cross-connect unit in the (N-1) cross-connect units, a second port of the i^{th} cross-connect unit is connected to an (i-1)^{th} second submodule in the (N-1) second submodules, a fourth port of the i^{th} cross-connect unit is grounded, and a third port of the i^{th} cross-connect unit is connected to a first port of an (i+1)^{th} cross-connect unit in the (N-1) cross-connect units. Herein, i is an integer greater than 1 and less than (N-1). A first port of an (N-1)^{th} cross-connect unit in the (N-1) cross-connect units is connected to a third port of an (N-2)^{th} cross-connect unit in the (N-1) cross-connect units, a second port of the (N-1)^{th} cross-connect unit is connected to an (N-2)^{th} second submodule in the (N-1) second submodules, a fourth port of the (N-1) cross-connect units is grounded, and a third port of the (N-1) cross-connect units is connected to an (N-1)^{th} second submodule in the (N-1) second submodules.

It should be understood that, in the communication apparatus shown in FIG. 11B, the first RRU in this embodiment of this application may be the 1^{st} RRU in the N RRUs. In this case, a first cross-connect unit connected to the first RRU is the 1^{st} cross-connect unit in the (N-1) cross-connect units. In the case of signal sending, the first cross-connect unit may receive the first radio frequency signal through the first port and send the first radio frequency signal through the third port; or may receive the first radio frequency signal through the first port, divide the first radio frequency signal into two radio frequency sub-signals, send one of the radio frequency sub-signals through the second port, and send the remaining one radio frequency sub-signal through the third port. In the case of signal receiving, the first cross-connect unit may receive the third radio frequency signal through the third port, and send the third radio frequency signal to the first RRU through the first port; or the first cross-connect unit may receive one radio frequency signal through the third port, receive one radio frequency signal from the first antenna through the second port, combine the two radio frequency signals into the third radio frequency signal, and send the third radio frequency signal to the first RRU through the first port.

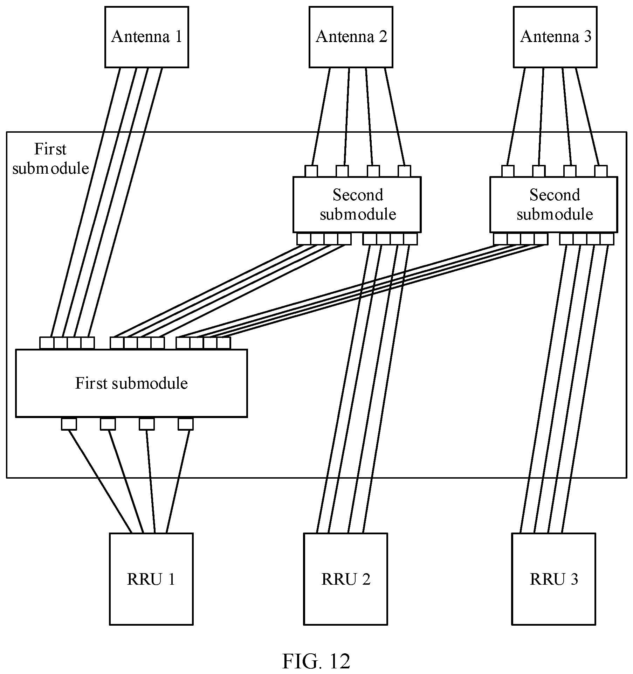

For ease of understanding this application, an example in which the RRU includes one port is used in the communication apparatuses shown in FIG. 10, FIG. 11A, and FIG. 11B. In a possible implementation, the RRU may support a plurality of ports. For example, it is assumed that the RRU supports H ports, the first submodule may include (N+1) groups of ports, and each group of ports includes H ports. Each group of three groups of ports of the (N-1) second submodules includes H ports, as shown in FIG. 12. It is assumed that the (N+1) groups of ports of the first submodule are denoted as a 3^{rd} group of ports and N groups of ports, and the three groups of ports of the second submodule are denoted as a 4^{th} group of ports, a 5^{th} group of ports, and a 6^{th} group of ports. A j^{th} port in the 3^{rd} group of ports of the first submodule is connected to a j^{th} port of the first RRU. A j^{th} port in a group of ports in the N groups of ports of the first submodule is connected to a j^{th} port of the first antenna; and a group of ports in the remaining (N-1) groups of ports is connected to a 4^{th} group of ports of one second submodule in the (N-1) second submodules, where a j^{th} port in the group of ports is connected to a j^{th} port in the 4^{th} group of ports. The 5^{th} group of ports of each second submodule is connected to H ports of an RRU in the (N-1) RRUs, in the N RRUs, other than the first RRU, where a j^{th} port in the 5^{th} group of ports is connected to a j^{th} port in the H ports. The 6^{th} group of ports of each second submodule is connected to H ports of an antenna group in the (N-1) antenna groups, in the N antenna groups, other than the first antenna, where a j^{th} port in the 6^{th} group of ports is connected to a j^{th} port in the H ports. Herein, j is an integer greater than 0 and less than or equal to H. In FIG. 12, an example in which the RRU supports four ports and N is equal to 3 is used.

In the communication apparatus shown in FIG. 12, the first submodule may include H groups of cross-connect networks, where each group of cross-connect networks includes (N-1) cross-connect units. For a connection manner of the (N-1) cross-connect units, refer to a connection manner of the (N-1) cross-connect units in FIG. 11A or FIG. 11B. Details are not described herein again. The H groups of cross-connect networks one-to-one correspond to H ports of the first RRU, that is, one group of cross-connect networks in the H groups of cross-connect networks corresponds to one port in the H ports of the first RRU, and one port in the H ports of the first RRU also corresponds to one group of cross-connect networks in the H groups of cross-connect networks. A k^{th} cross-connect network in the H groups of cross-connect networks is connected to a k^{th} port of the first RRU, the k^{th} cross-connect network is connected to a k^{th} port of the first antenna corresponding to the first RRU, and the k^{th} cross-connect network is connected to a k^{th} port in the fourth group of ports of each second submodule. Herein, k is an integer greater than 0 and less than or equal to H.

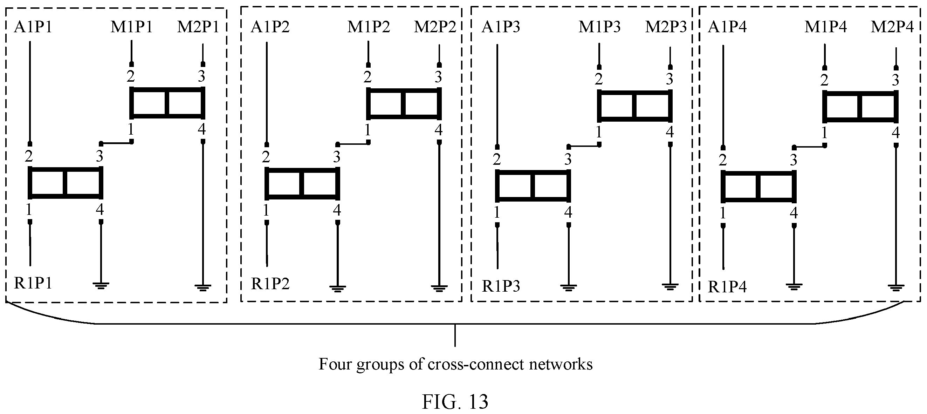

For example, N is greater than 2. A connection relationship between (N-1) cross-connect units in the k^{th} cross-connect network and each of the first RRU, the first antenna, and the (N-1) second submodules may be as follows: A first port of a 1^{st} cross-connect unit in the (N-1) cross-connect units is connected to the k^{th} port of the first RRU, and a second port of the 1^{st} cross-connect unit is connected to the k^{th} port of the first antenna; a second port of an x^{th} cross-connect unit in the (N-1) cross-connect units is connected to a k^{th} port in a 4^{th} group of ports of an (x-1)^{th} second submodule, where x is an integer greater than 1 and less than or equal to N; and a third port of a (N-1)^{th} cross-connect unit in the (N-1) cross-connect units is connected to a k^{th} port in a 4^{th} group of ports of an (N-1)^{th} second submodule, as shown in FIG. 13. In FIG. 13, an example in which the RRU supports four ports and N is equal to 3 is used. In FIG. 13, R1P1 indicates a 1^{st} port of the RRU 1, A1P1 indicates a 1^{st} port of the antenna 1, and M1P1 indicates a 1^{st} port in a 4^{th} group of ports of a 1^{st} second submodule. Others are similar, and are not described one by one herein.

In Manner 2, the second submodule may be configured to receive a radio frequency signal or a radio frequency sub-signal from the first submodule, or may be configured to receive a radio frequency signal from an RRU connected to the second submodule; and/or the second submodule may be further configured to send a radio frequency signal from an antenna to an RRU corresponding to the antenna, or configured to send a radio frequency signal from an antenna to the first submodule signal. In addition, the second submodule, the RRU, and the antenna may be deployed close to each other, so that a loss can be reduced.

For example, one second submodule may include one switch (for example, a radio frequency switch, denoted as S3), and the switch S3 may be connected to the first submodule, one RRU, and one antenna group corresponding to the RRU. The switch S3 is controlled, so that the second submodule may be connected to the first submodule and disconnected from one RRU; or the second submodule may be disconnected from the first submodule and connected to one RRU.

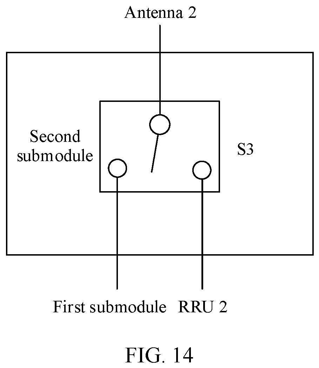

It is assumed that one RRU is the RRU 2, and the antenna corresponding to the RRU 2 is the antenna 2, as shown in FIG. 14. In a scenario in which the second submodule is connected to the first submodule and disconnected from the RRU 2, the second submodule may receive the first radio frequency signal or the radio frequency sub-signal from the first submodule, and send the first radio frequency signal or the radio frequency sub-signal to the antenna 2; and/or the second submodule may receive a radio frequency signal from the antenna 2, and send the radio frequency signal to the first submodule. In a scenario in which the second submodule is disconnected from the first submodule and is connected to the RRU 2, the second submodule may receive a radio frequency signal from the RRU 2, and send the radio frequency signal to the antenna 2; and/or the second submodule may receive the radio frequency signal from the antenna 2, and send the radio frequency signal to the RRU 2.

In Table 1, the communication apparatus in FIG. 6, FIG. 7A, FIG. 7B, FIG. 8, FIG. 10, FIG. 11A, FIG. 11B, or FIG. 12 is used as an example to show a signal sending situation in three-sector networking. As shown in Table 1, when a cross-connect unit 1 is in a cross-connect state, and a cross-connect unit 2 is in a power division state, the RRU 1 may drive the antenna 2 and the antenna 3, so that the RRU 2 and the RRU 3 are in the idle state. When the cross-connect unit 1 is in the power division state, and the cross-connect unit 2 is in a bar state, the RRU 1 may drive the antenna 1 and the antenna 2, so that the RRU 2 is in the idle state. When the cross-connect unit 1 is in the power division state, and the cross-connect unit 2 is in the cross-connect state, the RRU 1 may drive the antenna 1 and the antenna 3, so that the RRU 3 is in the idle state. When the cross-connect unit 1 is in the power division state, and the cross-connect unit 2 is in the power division state, the RRU 1 may drive the antenna 1, the antenna 2, and the antenna 3, so that the RRU 2 and the RRU 3 are in the idle state.

**Table 1**

| Cross-connect unit 1 | Cross-connect unit 2 | States of three RRUs | Driven antenna |
|---|---|---|---|
| Bar state | - | The RRU 1 is working | Antenna 1 |
| Cross-connect state | Bar state | The RRU 1 is working and the RRU 2 is idle | Antenna 2 |
| Cross-connect state | Cross-connect state | The RRU 1 is working and the RRU 3 is idle | Antenna 3 |
| Cross-connect state | Power division state | The RRU 1 is working, and the RRU 2 and the RRU 3 are idle | Antenna 2 and antenna 3 |
| Power division state | Bar state | The RRU 1 is working and the RRU 2 is idle | Antenna 1 and antenna 2 |
| Power division state | Cross-connect state | The RRU 1 is working and the RRU 3 is idle | Antenna 1 and antenna 3 |
| Power division state | Power division state | The RRU 1 is working, and the RRU 2 and the RRU 3 are idle | Antenna 1, antenna 2, and antenna 3 |

In Table 2, the communication apparatus in FIG. 6, FIG. 7A, FIG. 7B, FIG. 8, FIG. 10, FIG. 11A, FIG. 11B, or FIG. 12 is used as an example to show a signal receiving situation in three-sector networking. As shown in Table 2, when a cross-connect unit 1 is in the cross-connect state and a cross-connect unit 2 is in a combination state, the cross-connect unit 2 combines the radio frequency signal from the antenna 2 and a radio frequency signal from the antenna 3 into the third radio frequency signal, and sends the third radio frequency signal to the RRU 1 through the cross-connect unit 1, so that the RRU 2 and the RRU 3 are in the idle state. When the cross-connect unit 1 is in the combination state, and the cross-connect unit 2 is in the bar state, the cross-connect unit 1 may combine the radio frequency signal from the antenna 1 and the radio frequency signal from the antenna 2 into the third radio frequency signal, and send the third radio frequency signal to the RRU 1, so that the RRU 2 is in the idle state. When the cross-connect unit 1 is in the combination state and the cross-connect unit 2 is in the cross-connect state, the cross-connect unit 1 may combine the radio frequency signal from the antenna 1 and the radio frequency signal from the antenna 3 into the third radio frequency signal, and send the third radio frequency signal to the RRU 1, so that the RRU 3 is in the idle state. When the cross-connect unit 1 is in the combination state and the cross-connect unit 2 is in the combination state, the cross-connect unit 2 may combine the radio frequency signal from the antenna 2 and the radio frequency signal from the antenna 3 into one radio frequency signal, and send the radio frequency signal to the cross-connect unit 1. The cross-connect unit 1 combines the radio frequency signal from the cross-connect unit 2 and the radio frequency signal from the antenna 1 into the third radio frequency signal, and sends the third radio frequency signal to the RRU 1, so that the RRU 2 and the RRU 3 are in the idle state.

**Table 2**

| Cross-connect unit 1 | Cross-connect unit 2 | States of three RRUs | Radio frequency signal source |
|---|---|---|---|
| Bar state | - | The RRU 1 is working | Antenna 1 |
| Cross-connect state | Bar state | The RRU 1 is working and the RRU 2 is idle | Antenna 2 |
| Cross-connect state | Cross-connect state | The RRU 1 is working and the RRU 3 is idle | Antenna 3 |
| Cross-connect state | Combination state | The RRU 1 is working, and the RRU 2 and the RRU 3 are idle | Antenna 2 and antenna 3 |
| Combination state | Bar state | The RRU 1 is working and the RRU 2 is idle | Antenna 1 and antenna 2 |
| Combination state | Cross-connect state | The RRU 1 is working and the RRU 3 is idle | Antenna 1 and antenna 3 |
| Combination state | Combination state | The RRU 1 is working, and the RRU 2 and the RRU 3 are idle | Antenna 1, antenna 2, and antenna 3 |

It should be noted that a multi-port connection manner in FIG. 8, FIG. 9, FIG. 12, or FIG. 13 is merely an example, and this is not limited in embodiments of this application.

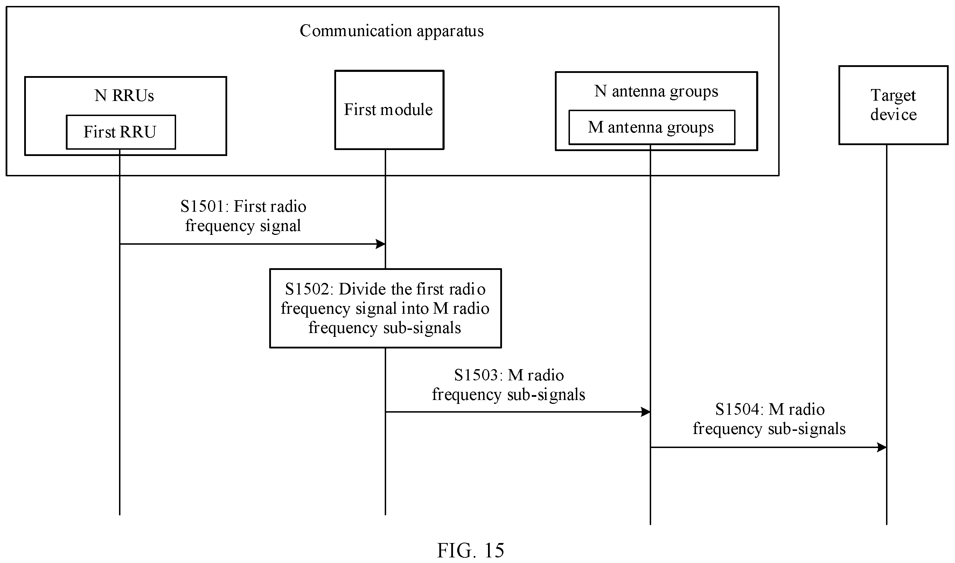

Based on a same technical concept as the foregoing embodiments, an embodiment of this application further provides a communication method. The communication method is implemented by the communication apparatus in the foregoing embodiments. For the communication apparatus in the method, refer to the foregoing descriptions. Details are not described herein again. FIG. 15 is a schematic flowchart of a communication method according to an embodiment of this application by using an example in which the communication apparatus sends a signal. As shown in FIG. 15, the method includes the following content.

S1501: A first RRU sends a first radio frequency signal to a first module; and correspondingly, the first module receives the first radio frequency signal from the first RRU.

The first RRU is one RRU in the N RRUs in the communication apparatus in the foregoing embodiments. Load of a cell corresponding to the first RRU is less than or equal to a load threshold. For composition of the first module, refer to descriptions about the first module in FIG. 6, FIG. 7A, FIG. 7B, FIG. 8, FIG. 10, FIG. 11A, FIG. 11B, and FIG. 12. Details are not described herein again. For a specific implementation in which the first module may receive the signal from the first RRU, refer to related descriptions in the foregoing embodiments. Details are not described herein again.

S1502: The first module divides the first radio remote unit into M radio frequency sub-signals, where M is an integer greater than 1 and less than or equal to N. In FIG. 15, an example in which M is less than N is used. For example, the first module may determine, based on load corresponding to each RRU in the N RRUs, that working states of M RRUs in the N RRUs may be switched to an idle state or a non-working state, and divide the first radio remote unit into the M radio frequency sub-signals based on the M RRUs. For example, if load of a cell corresponding to the RRU is less than or equal to the load threshold, the first module determines that a working state of the RRU may be switched to the idle state or the non-working state. For a specific implementation of S1502, refer to related descriptions in FIG. 6. Details are not described herein again.

S1503: The first module sends the M radio frequency sub-signals to M antenna groups corresponding to the M RRUs in the N RRUs, and correspondingly, the M antenna groups receive the M radio frequency sub-signals. One antenna group receives one radio frequency sub-signal.

S1504: The M antenna groups send the M radio frequency sub-signals. In FIG. 15, an example in which the M antenna groups send the M radio frequency sub-signals to a target device is used. However, this is not limited in embodiments of this application. For example, the M antenna groups may also broadcast the M radio frequency sub-signals.

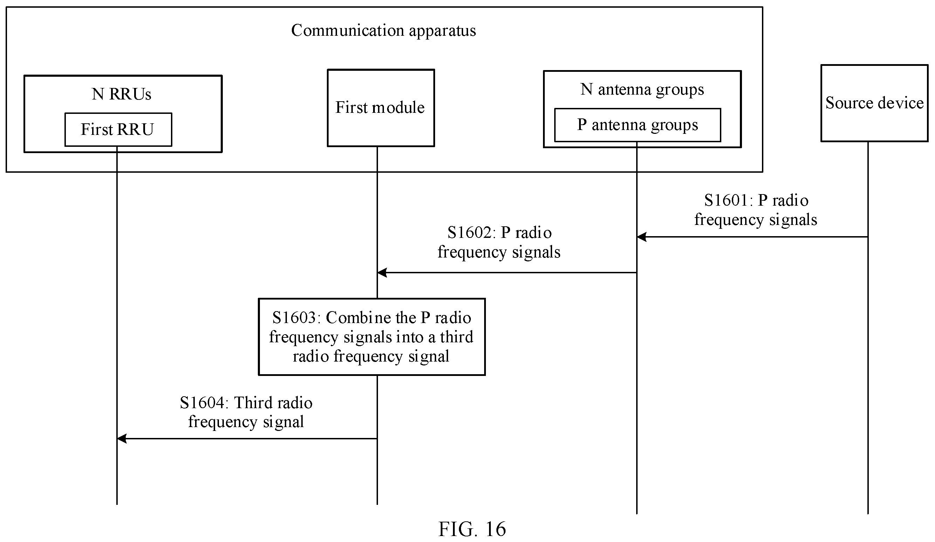

Based on a same technical concept as the foregoing embodiments, an embodiment of this application further provides a communication method. The communication method is implemented by the communication apparatus in the foregoing embodiments. For the communication apparatus in the method, refer to the foregoing descriptions. Details are not described herein again. FIG. 16 is a schematic flowchart of a communication method according to an embodiment of this application by using an example in which the communication apparatus receives a signal. As shown in FIG. 15, the method includes the following content.

S1601: P antenna groups in N antenna groups receive P radio frequency signals. One antenna group receives one radio frequency signal. P is an integer greater than 1 and less than or equal to N. In FIG. 16, an example in which P is less than N is used. In addition, in FIG. 16, an example in which the P radio frequency signals are from a source device is used. However, this is not limited in embodiments of this application.

S1602: The P antenna groups send the P radio frequency signals to a first module, and correspondingly, the first module receives the P radio frequency signals from the P antenna groups. For composition of the first module, refer to descriptions about the first module in FIG. 6, FIG. 7A, FIG. 7B, FIG. 8, FIG. 10, FIG. 11A, FIG. 11B, and FIG. 12. Details are not described herein again.

S1603: The first module combines the P radio frequency signals into a third radio frequency signal.

For example, the first module may combine the P radio frequency signals into the third radio frequency signal based on load of a cell corresponding to each RRU in N RRUs. Load of a cell corresponding to each RRU in P RRUs corresponding to the P antenna groups is less than or equal to a load threshold. For a specific implementation of S1603, refer to related descriptions in FIG. 6. Details are not described herein again.

S1604: The first module sends the third radio frequency signal to a first RRU; and correspondingly, the first RRU receives the third radio frequency signal.

The first RRU is one RRU in the N RRUs in the communication apparatus in the foregoing embodiments. Load of a cell corresponding to the first RRU is less than or equal to the load threshold.

It should be noted that for a specific implementation process of the communication method in this embodiment of this application, refer to related description content of the communication apparatus in the foregoing embodiments. Details are not described herein again.

Based on a same technical concept, an embodiment of this application further provides a communication apparatus. The communication apparatus includes at least one processor and an interface circuit. The at least one processor is configured to implement the methods in embodiments. The interface circuit is configured to implement communication with another communication apparatus.

Based on a same technical concept, an embodiment of this application further provides an electronic device. The electronic device may implement a function of the first module.

Based on a same technical concept, an embodiment of this application further provides a computer-readable storage medium. The computer-readable storage medium stores instructions. When the instructions are run on a computer, the computer is enabled to perform the methods in embodiments.

Based on a same technical concept, an embodiment of this application further provides a computer program product, including instructions. When the instructions are run on a computer, the computer is enabled to perform the methods in embodiments.

Based on a same technical concept, an embodiment of this application further provides a chip system. The chip system includes at least one processor and an interface circuit. The processor is configured to perform instruction and/or data exchange through the interface circuit, so that an apparatus in which the chip system is located performs the methods in embodiments. Optionally, the chip system may include a chip, or may include a chip and another discrete component.

Based on a same technical concept, an embodiment of this application further provides a chip. The chip is configured to read a computer program stored in a memory, to perform the methods in embodiments.

All or some of the methods in embodiments of this application may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims of this application.

## Claims

1. A communication method, wherein the method is applied to a communication apparatus, and the communication apparatus comprises N radio remote units, a first module, and N antenna groups, wherein each radio remote unit is connected to the first module, each antenna group is connected to the first module, and the N radio remote units one-to-one correspond to the N antenna groups, wherein N is an integer greater than 1; and the method comprises:
sending, by a first radio remote unit in the N radio remote units, a first radio frequency signal to the first module;
receiving, by the first module, the first radio frequency signal, dividing the first radio frequency signal into M radio frequency sub-signals, and sending the M radio frequency sub-signals to M antenna groups corresponding to M radio remote units in the N radio remote units, wherein M is an integer greater than 1 and less than or equal to N; and
sending, by the M antenna groups, the M radio frequency sub-signals.

2. The method according to claim 1, wherein load of a cell corresponding to the first radio remote unit is less than or equal to a load threshold, and load of a cell corresponding to each radio remote unit in the M radio remote units is less than or equal to the load threshold.

3. The method according to claim 1 or 2, wherein the N radio remote units further comprise a second radio remote unit, and load of a cell corresponding to the second radio remote unit is greater than a load threshold; and the method further comprises:
sending, by the second radio remote unit, a second radio frequency signal to the first module; and
receiving, by the first module, the second radio frequency signal, and sending the second radio frequency signal to an antenna corresponding to the second radio remote unit.

4. The method according to any one of claims 1 to 3, wherein the method further comprises:
receiving, by P antenna groups in the N antenna groups, P radio frequency signals, and sending the P radio frequency signals to the first module, wherein P is an integer greater than 1 and less than N; and
receiving, by the first module, the P radio frequency signals, combining the P radio frequency signals into a third radio frequency signal, and sending the third radio frequency signal to the first radio remote unit.

5. The method according to claim 4, wherein the load of the cell corresponding to the first radio remote unit is less than or equal to the load threshold, and load of a cell corresponding to each radio remote unit in P radio remote units corresponding to the P antenna groups is less than or equal to the load threshold.

6. The method according to any one of claims 1 to 5, wherein the first module comprises a first submodule and (N-1) second submodules, and the first submodule is connected to each second submodule;
that each radio remote unit is connected to the first module comprises:
the first radio remote unit is connected to the first submodule, (N-1) radio remote units, in the N radio remote units, other than the first radio remote unit are connected to the (N-1) second submodules, and one second submodule is connected to one radio remote unit; and
that each antenna group is connected to the first module comprises:
a first antenna corresponding to the first radio remote unit is connected to the first submodule, (N-1) antenna groups, in the N antenna groups, other than the first antenna are connected to the (N-1) second submodules, and one second submodule is connected to one antenna group.

7. A communication method, wherein the method is applied to a communication apparatus, and the communication apparatus comprises N radio remote units, a first module, and N antenna groups, wherein each radio remote unit is connected to the first module, each antenna group is connected to the first module, and the N radio remote units one-to-one correspond to the N antenna groups, wherein N is an integer greater than 1; and the method comprises:
receiving, by P antenna groups in the N antenna groups, P radio frequency signals, and sending the P radio frequency signals to the first module, wherein P is an integer greater than 1 and less than or equal to N;
receiving, by the first module, the P radio frequency signals, combining the P radio frequency signals into a third radio frequency signal, and sending the third radio frequency signal to a first radio remote unit in the N radio remote units; and
receiving, by the first radio remote unit, the third radio frequency signal.

8. The method according to claim 7, wherein load of a cell corresponding to the first radio remote unit is less than or equal to a load threshold, and load of a cell corresponding to each radio remote unit in P radio remote units corresponding to the P antenna groups is less than or equal to the load threshold.

9. The method according to claim 7 or 8, wherein the N radio remote units further comprise a third radio remote unit, and load of a cell corresponding to the third radio remote unit is greater than a load threshold; and the method further comprises:
receiving, by an antenna corresponding to the third radio remote unit, a fourth radio frequency signal, and sending the fourth radio frequency signal to the first module;
receiving, by the first module, the fourth radio frequency signal, and sending the fourth radio frequency signal to the third radio remote unit; and
receiving, by the third radio remote unit, the fourth radio frequency signal.

10. The method according to any one of claims 7 to 9, wherein the method further comprises:
sending, by the first radio remote unit, a first radio frequency signal to the first module;
receiving, by the first module, the first radio frequency signal, dividing the first radio frequency signal into M radio frequency sub-signals, and sending the M radio frequency sub-signals to M antenna groups corresponding to M radio remote units in the N radio remote units, wherein M is an integer greater than 1 and less than or equal to N; and
sending, by the M antenna groups, the M radio frequency sub-signals.

11. The method according to claim 10, wherein the load of the cell corresponding to the first radio remote unit is less than or equal to the load threshold, and load of a cell corresponding to each radio remote unit in the M radio remote units is less than or equal to the load threshold.

12. The method according to any one of claims 7 to 11, wherein the first module comprises a first submodule and (N-1) second submodules, the first submodule is connected to each second submodule, and the first antenna is an antenna group in the N antenna groups;
that each radio remote unit is connected to the first module comprises:
the first radio remote unit is connected to the first submodule, (N-1) radio remote units, in the N radio remote units, other than the first radio remote unit are connected to the (N-1) second submodules, and one second submodule is connected to one radio remote unit; and
that each antenna group is connected to the first module comprises:
the first antenna corresponding to the first radio remote unit is connected to the first submodule, (N-1) antenna groups, in the N antenna groups, other than the first antenna are connected to the (N-1) second submodules, and one second submodule is connected to one antenna group.

13. A computer-readable storage medium, wherein the computer-readable storage medium stores instructions, and when the instructions are run on a computer, the computer is enabled to perform the method according to any one of claims 1 to 6, or perform the method according to any one of claims 7 to 12.

14. A communication apparatus, wherein the communication apparatus comprises at least one processor and an interface circuit, the at least one processor is configured to implement the method according to any one of claims 1 to 6, or perform the method according to any one of claims 7 to 12, and the interface circuit is configured to implement receiving and/or sending of the communication apparatus.

15. A computer program product, comprising instructions, wherein when the instructions are run on a computer, the computer is enabled to perform the method according to any one of claims 1 to 6, or perform the method according to any one of claims 7 to 12.

## Patentansprüche

1. Kommunikationsverfahren, wobei das Verfahren auf eine Kommunikationsvorrichtung angewendet wird und die Kommunikationsvorrichtung N entfernte Funkeinheiten, ein erstes Modul und N Antennengruppen umfasst, wobei jede entfernte Funkeinheit mit dem ersten Modul verbunden ist, jede Antennengruppe mit dem ersten Modul verbunden ist und die N entfernten Funkeinheiten den N Antennengruppen eins zu eins entsprechen, wobei N eine ganze Zahl größer als 1 ist; und wobei das Verfahren Folgendes umfasst:
Senden, durch eine erste entfernte Funkeinheit in den N entfernten Funkeinheiten, eines ersten Funkfrequenzsignals an das erste Modul;
Empfangen, durch das erste Modul, des ersten Funkfrequenzsignals, Aufteilen des ersten Funkfrequenzsignals in M Funkfrequenzteilsignale und Senden der M Funkfrequenzteilsignale an M Antennengruppen, die M entfernten Funkeinheiten in den N entfernten Funkeinheiten entsprechen, wobei M eine ganze Zahl größer als 1 und kleiner als oder gleich N ist; und
Senden, durch die M Antennengruppen, der M Funkfrequenzteilsignale.

2. Verfahren nach Anspruch 1, wobei eine Last einer Zelle, die der ersten entfernten Funkeinheit entspricht, kleiner als oder gleich einem Lastschwellenwert ist und eine Last einer Zelle, die jeder entfernten Funkeinheit in den M entfernten Funkeinheiten entspricht, kleiner als oder gleich dem Lastschwellenwert ist.

3. Verfahren nach Anspruch 1 oder 2, wobei die N entfernten Funkeinheiten ferner eine zweite entfernte Funkeinheit umfassen und eine Last einer Zelle, die der zweiten entfernten Funkeinheit entspricht, größer als ein Lastschwellenwert ist; und wobei das Verfahren ferner Folgendes umfasst:
Senden, durch die zweite entfernte Funkeinheit, eines zweiten Funkfrequenzsignals an das erste Modul; und
Empfangen, durch das erste Modul, des zweiten Funkfrequenzsignals und Senden des zweiten Funkfrequenzsignals an eine Antenne, die der zweiten entfernten Funkeinheit entspricht.

4. Verfahren nach einem der Ansprüche 1 bis 3, wobei das Verfahren ferner Folgendes umfasst:
Empfangen, durch P Antennengruppen in den N Antennengruppen, von P Funkfrequenzsignalen und Senden der P Funkfrequenzsignale an das erste Modul, wobei P eine ganze Zahl größer als 1 und kleiner als N ist; und
Empfangen, durch das erste Modul, der P Funkfrequenzsignale, Kombinieren der P Funkfrequenzsignale zu einem dritten Funkfrequenzsignal und Senden des dritten Funkfrequenzsignals an die erste entfernte Funkeinheit.

5. Verfahren nach Anspruch 4, wobei die Last der Zelle, die der ersten entfernten Funkeinheit entspricht, kleiner als oder gleich dem Lastschwellenwert ist und eine Last einer Zelle, die jeder entfernten Funkeinheit in P entfernten Funkeinheiten entspricht, die den P Antennengruppen entsprechen, kleiner als oder gleich dem Lastschwellenwert ist.

6. Verfahren nach einem der Ansprüche 1 bis 5, wobei das erste Modul ein erstes Untermodul und (N-1) zweite Untermodule umfasst und das erste Untermodul mit jedem zweiten Untermodul verbunden ist;
wobei die Tatsache, dass jede entfernte Funkeinheit mit dem ersten Modul verbunden ist, Folgendes umfasst:
die erste entfernte Funkeinheit ist mit dem ersten Untermodul verbunden, (N-1) entfernte Funkeinheiten in den N entfernten Funkeinheiten, die nicht die erste entfernte Funkeinheit sind, sind mit den (N-1) zweiten Untermodulen verbunden und ein zweites Untermodul ist mit einer entfernten Funkeinheit verbunden; und
wobei die Tatsache, dass jede Antennengruppe mit dem ersten Modul verbunden ist, Folgendes umfasst:
eine erste Antenne, die der ersten entfernten Funkeinheit entspricht, ist mit dem ersten Untermodul verbunden, (N-1) Antennengruppen in den N Antennengruppen, die nicht die erste Antenne sind, sind mit den (N-1) zweiten Untermodulen verbunden und ein zweites Untermodul ist mit einer Antennengruppe verbunden.

7. Kommunikationsverfahren, wobei das Verfahren auf eine Kommunikationsvorrichtung angewendet wird und die Kommunikationsvorrichtung N entfernte Funkeinheiten, ein erstes Modul und N Antennengruppen umfasst, wobei jede entfernte Funkeinheit mit dem ersten Modul verbunden ist, jede Antennengruppe mit dem ersten Modul verbunden ist und die N entfernten Funkeinheiten den N Antennengruppen eins zu eins entsprechen, wobei N eine ganze Zahl größer als 1 ist; und wobei das Verfahren Folgendes umfasst:
Empfangen, durch P Antennengruppen in den N Antennengruppen, von P Funkfrequenzsignalen und Senden der P Funkfrequenzsignale an das erste Modul, wobei P eine ganze Zahl größer als 1 und kleiner als oder gleich N ist;
Empfangen, durch das erste Modul, der P Funkfrequenzsignale, Kombinieren der P Funkfrequenzsignale zu einem dritten Funkfrequenzsignal und Senden des dritten Funkfrequenzsignals an die erste entfernte Funkeinheit in den N entfernten Funkeinheiten; und
Empfangen, durch die erste entfernte Funkeinheit, des dritten Funkfrequenzsignals.

8. Verfahren nach Anspruch 7, wobei eine Last einer Zelle, die der ersten entfernten Funkeinheit entspricht, kleiner als oder gleich einem Lastschwellenwert ist und eine Last einer Zelle, die jeder entfernten Funkeinheit in P entfernten Funkeinheiten entspricht, die den P Antennengruppen entsprechen, kleiner als oder gleich dem Lastschwellenwert ist.

9. Verfahren nach Anspruch 7 oder 8, wobei die N entfernten Funkeinheiten ferner eine dritte entfernte Funkeinheit umfassen und eine Last einer Zelle, die der dritten entfernten Funkeinheit entspricht, größer als ein Lastschwellenwert ist; und wobei das Verfahren ferner Folgendes umfasst:
Empfangen, durch eine Antenne, die der dritten entfernten Funkeinheit entspricht, eines vierten Funkfrequenzsignals und Senden des vierten Funkfrequenzsignals an das erste Modul;
Empfangen, durch das erste Modul, des vierten Funkfrequenzsignals und Senden des vierten Funkfrequenzsignals an die dritte entfernte Funkeinheit; und
Empfangen, durch die dritte entfernte Funkeinheit, des vierten Funkfrequenzsignals.

10. Verfahren nach einem der Ansprüche 7 bis 9, wobei das Verfahren ferner Folgendes umfasst:
Senden, durch die erste entfernte Funkeinheit, eines ersten Funkfrequenzsignals an das erste Modul;
Empfangen, durch das erste Modul, des ersten Funkfrequenzsignals, Aufteilen des ersten Funkfrequenzsignals in M Funkfrequenzteilsignale und Senden der M Funkfrequenzteilsignale an M Antennengruppen, die M entfernten Funkeinheiten in den N entfernten Funkeinheiten entsprechen,
wobei M eine ganze Zahl größer als 1 und kleiner als oder gleich N ist; und
Senden, durch die M Antennengruppen, der M Funkfrequenzteilsignale.

11. Verfahren nach Anspruch 10, wobei die Last der Zelle, die der ersten entfernten Funkeinheit entspricht, kleiner als oder gleich dem Lastschwellenwert ist und eine Last einer Zelle, die jeder entfernten Funkeinheit in den M entfernten Funkeinheiten entspricht, kleiner als oder gleich dem Lastschwellenwert ist.

12. Verfahren nach einem der Ansprüche 7 bis 11, wobei das erste Modul ein erstes Untermodul und (N-1) zweite Untermodule umfasst, das erste Untermodul mit jedem zweiten Untermodul verbunden ist und die erste Antenne eine Antennengruppe in den N Antennengruppen ist;
wobei die Tatsache, dass jede entfernte Funkeinheit mit dem ersten Modul verbunden ist, Folgendes umfasst:
die erste entfernte Funkeinheit ist mit dem ersten Untermodul verbunden, (N-1) entfernte Funkeinheiten in den N entfernten Funkeinheiten, die nicht die erste entfernte Funkeinheit sind, sind mit den (N-1) zweiten Untermodulen verbunden und ein zweites Untermodul ist mit einer entfernten Funkeinheit verbunden; und
wobei die Tatsache, dass jede Antennengruppe mit dem ersten Modul verbunden ist, Folgendes umfasst:
die erste Antenne, die der ersten entfernten Funkeinheit entspricht, ist mit dem ersten Untermodul verbunden, (N-1) Antennengruppen in den N Antennengruppen, die nicht die erste Antenne sind, sind mit den (N-1) zweiten Untermodulen verbunden und ein zweites Untermodul ist mit einer Antennengruppe verbunden.

13. Computerlesbares Speichermedium, wobei das computerlesbare Speichermedium Anweisungen speichert und, wenn die Anweisungen auf einem Computer ausgeführt werden, der Computer in die Lage versetzt wird, das Verfahren nach einem der Ansprüche 1 bis 6 durchzuführen oder das Verfahren nach einem der Ansprüche 7 bis 12 durchzuführen.

14. Kommunikationsvorrichtung, wobei die Kommunikationsvorrichtung mindestens einen Prozessor und eine Schnittstellenschaltung umfasst, der mindestens eine Prozessor dazu konfiguriert ist, das Verfahren nach einem der Ansprüche 1 bis 6 zu implementieren oder das Verfahren nach einem der Ansprüche 7 bis 12 durchzuführen, und die Schnittstellenschaltung dazu konfiguriert ist, Empfangen und/oder Senden der Kommunikationsvorrichtung zu implementieren.

15. Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 6 durchzuführen oder das Verfahren nach einem der Ansprüche 7 bis 12 durchzuführen.

## Revendications

1. Procédé de communication, dans lequel le procédé est appliqué à un appareil de communication, et l'appareil de communication comprend N unités radio distantes, un premier module et N groupes d'antennes, dans lequel chaque unité radio distante est connectée au premier module, chaque groupe d'antennes est connecté au premier module, et les N unités radio distantes sont en correspondance biunivoque avec les N groupes d'antennes, dans lequel N est un entier supérieur à 1 ; et le procédé comprend :
l'envoi, par une première unité radio distante parmi les N unités radio distantes, d'un premier signal de radiofréquence au premier module ;
la réception, par le premier module, du premier signal de radiofréquence, la division du premier signal de radiofréquence en M sous-signaux de radiofréquence, et l'envoi des M sous-signaux de radiofréquence à M groupes d'antennes correspondant à M unités radio distantes parmi les N unités radio distantes, dans lequel M est un entier supérieur à 1 et inférieur ou égal à N ; et
l'envoi, par les M groupes d'antennes, des M sous-signaux de radiofréquence.

2. Procédé selon la revendication 1, dans lequel la charge d'une cellule correspondant à la première unité radio distante est inférieure ou égale à un seuil de charge, et la charge d'une cellule correspondant à chaque unité radio distante parmi les M unités radio distantes est inférieure ou égale au seuil de charge.

3. Procédé selon la revendication 1 ou 2, dans lequel les N unités radio distantes comprennent en outre une deuxième unité radio distante, et la charge d'une cellule correspondant à la deuxième unité radio distante est supérieure à un seuil de charge ; et le procédé comprend en outre :
l'envoi, par la deuxième unité radio distante, d'un deuxième signal de radiofréquence au premier module ; et
la réception, par le premier module, du deuxième signal de radiofréquence et l'envoi du deuxième signal de radiofréquence à une antenne correspondant à la deuxième unité radio distante.

4. Procédé selon l'une quelconque des revendications 1 à 3, dans lequel le procédé comprend en outre :
la réception, par P groupes d'antennes parmi les N groupes d'antennes, de P signaux de radiofréquence, et l'envoi des P signaux de radiofréquence au premier module, dans lequel P est un entier supérieur à 1 et inférieur à N ; et
la réception, par le premier module, des P signaux de radiofréquence, la combinaison des P signaux de radiofréquence en un troisième signal de radiofréquence et l'envoi du troisième signal de radiofréquence à la première unité radio distante.

5. Procédé selon la revendication 4, dans lequel la charge de la cellule correspondant à la première unité radio distante est inférieure ou égale au seuil de charge, et la charge d'une cellule correspondant à chaque unité radio distante parmi les P unités radio distantes correspondant aux P groupes d'antennes est inférieure ou égale au seuil de charge.

6. Procédé selon l'une quelconque des revendications 1 à 5, dans lequel le premier module comprend un premier sous-module et (N-1) seconds sous-modules, et le premier sous-module est connecté à chaque second sous-module ;
le fait que chaque unité radio distante est connectée au premier module comprend :
la première unité radio distante est connectée au premier sous-module, (N-1) unités radio distantes parmi les N unités radio distantes autres que la première unité radio distante sont connectées aux (N-1) seconds sous-modules, et un second sous-module est connecté à une unité radio distante ; et
le fait que chaque groupe d'antennes est connecté au premier module comprend :
une première antenne correspondant à la première unité radio distante est connectée au premier sous-module, (N-1) groupes d'antennes parmi les N groupes d'antennes autres que la première antenne sont connectés aux (N-1) seconds sous-modules, et un second sous-module est connecté à un groupe d'antennes.

7. Procédé de communication, dans lequel le procédé est appliqué à un appareil de communication, et l'appareil de communication comprend N unités radio distantes, un premier module et N groupes d'antennes, dans lequel chaque unité radio distante est connectée au premier module, chaque groupe d'antennes est connecté au premier module, et les N unités radio distantes sont en correspondance biunivoque avec les N groupes d'antennes, dans lequel N est un entier supérieur à 1 ; et le procédé comprend :
la réception, par P groupes d'antennes parmi les N groupes d'antennes, de P signaux de radiofréquence, et l'envoi des P signaux de radiofréquence au premier module, dans lequel P est un entier supérieur à 1 et inférieur ou égal à N ;
la réception, par le premier module, des P signaux de radiofréquence, la combinaison des P signaux de radiofréquence en un troisième signal de radiofréquence et l'envoi du troisième signal de radiofréquence à une première unité radio distante parmi les N unités radio distantes ; et
la réception, par la première unité radio distante, du troisième signal de radiofréquence.

8. Procédé selon la revendication 7, dans lequel la charge d'une cellule correspondant à la première unité radio distante est inférieure ou égale à un seuil de charge, et la charge d'une cellule correspondant à chaque unité radio distante parmi les P unités radio distantes correspondant aux P groupes d'antennes est inférieure ou égale au seuil de charge.

9. Procédé selon la revendication 7 ou 8, dans lequel les N unités radio distantes comprennent en outre une troisième unité radio distante, et la charge d'une cellule correspondant à la troisième unité radio distante est supérieure à un seuil de charge ; et le procédé comprend en outre :
la réception, par une antenne correspondant à la troisième unité radio distante, d'un quatrième signal de radiofréquence, et l'envoi du quatrième signal de radiofréquence au premier module ;
la réception, par le premier module, du quatrième signal de radiofréquence, et l'envoi du quatrième signal de radiofréquence à la troisième unité radio distante ; et
la réception, par la troisième unité radio distante, du quatrième signal de radiofréquence.

10. Procédé selon l'une quelconque des revendications 7 à 9, dans lequel le procédé comprend en outre :
l'envoi, par la première unité radio distante, d'un premier signal de radiofréquence au premier module ;
la réception, par le premier module, du premier signal de radiofréquence, la division du premier signal de radiofréquence en M sous-signaux de radiofréquence, et l'envoi des M sous-signaux de radiofréquence à M groupes d'antennes correspondant à M unités radio distantes parmi les N unités radio distantes, dans lequel M est un entier supérieur à 1 et inférieur ou égal à N ; et
l'envoi, par les M groupes d'antennes, des M sous-signaux de radiofréquence.

11. Procédé selon la revendication 10, dans lequel la charge de la cellule correspondant à la première unité radio distante est inférieure ou égale au seuil de charge, et la charge d'une cellule correspondant à chaque unité radio distante parmi les M unités radio distantes est inférieure ou égale au seuil de charge.

12. Procédé selon l'une quelconque des revendications 7 à 11, dans lequel le premier module comprend un premier sous-module et (N-1) seconds sous-modules, le premier sous-module est connecté à chaque second sous-module, et la première antenne est un groupe d'antennes parmi les N groupes d'antennes ;
le fait que chaque unité radio distante est connectée au premier module comprend :
la première unité radio distante est connectée au premier sous-module, (N-1) unités radio distantes parmi les N unités radio distantes autres que la première unité radio distante sont connectées aux (N-1) seconds sous-modules, et chaque second sous-module est connecté à une unité radio distante ; et
le fait que chaque groupe d'antennes est connecté au premier module comprend :
la première antenne correspondant à la première unité radio distante est connectée au premier sous-module, (N-1) groupes d'antennes parmi les N groupes d'antennes autres que la première antenne sont connectés aux (N-1) seconds sous-modules, et un second sous-module est connecté à un groupe d'antennes.

13. Support de stockage lisible par ordinateur, dans lequel le support de stockage lisible par ordinateur stocke des instructions, et lorsque les instructions sont exécutées sur un ordinateur, l'ordinateur est en mesure de réaliser le procédé selon l'une quelconque des revendications 1 à 6, ou de réaliser le procédé selon l'une quelconque des revendications 7 à 12.

14. Appareil de communication, dans lequel l'appareil de communication comprend au moins un processeur et un circuit d'interface, l'au moins un processeur est configuré pour mettre en œuvre le procédé selon l'une quelconque des revendications 1 à 6, ou pour réaliser procédé selon l'une quelconque des revendications 7 à 12, et le circuit d'interface est configuré pour mettre en œuvre la réception et/ou l'envoi de l'appareil de communication.

15. Produit de programme informatique comprenant des instructions, dans lequel lorsque les instructions sont exécutées sur un ordinateur, l'ordinateur est en mesure de réaliser le procédé selon l'une quelconque des revendications 1 à 6 ou de réaliser le procédé selon l'une quelconque des revendications 7 à 12.
